(19) Europäisches Patentamt
European Patent Office
Office européen des brevets

(11) **EP 3 710 182 B1**

(12) **EUROPÄISCHE PATENTSCHRIFT**

(45) Veröffentlichungstag und Bekanntmachung des Hinweises auf die Patenterteilung:
**01.11.2023   Patentblatt 2023/44**

(21) Anmeldenummer: **18765433.0**

(22) Anmeldetag: **04.09.2018**

(51) Internationale Patentklassifikation (IPC):
*B22F 5/10* (2006.01)     *B22F 7/00* (2006.01)
*B22F 10/28* (2021.01)    *B22F 10/366* (2021.01)
*B22F 10/38* (2021.01)    *B29C 64/153* (2017.01)
*B29C 64/393* (2017.01)   *B33Y 10/00* (2015.01)
*B33Y 50/00* (2015.01)    *B33Y 80/00* (2015.01)
*C04B 35/622* (2006.01)   *C04B 35/653* (2006.01)
*B22F 5/00* (2006.01)     *B22F 10/36* (2021.01)
*B33Y 30/00* (2015.01)    *B33Y 50/02* (2015.01)

(52) Gemeinsame Patentklassifikation (CPC):
**B22F 5/10; B22F 7/002; B22F 10/28; B22F 10/366; B22F 10/385; B29C 64/153; B29C 64/393; B33Y 10/00; B33Y 50/00; B33Y 80/00; C04B 35/622; C04B 35/653;** B22F 10/36; B22F 2005/005; B22F 2207/17;     (Forts.)

(86) Internationale Anmeldenummer:
**PCT/EP2018/073788**

(87) Internationale Veröffentlichungsnummer:
**WO 2019/091621 (16.05.2019 Gazette 2019/20)**

(54) **SCHICHTSELEKTIVE BELICHTUNG IM ÜBERHANGBEREICH BEI DER GENERATIVEN FERTIGUNG**

LAYER-SELECTIVE EXPOSURE IN THE OVERHANG REGION IN ADDITIVE MANUFACTURING

ÉCLAIRAGE SÉLECTIF PAR COUCHE DANS LA ZONE EN SURPLOMB LORS DE LA FABRICATION ADDITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2017   DE 102017126624**

(43) Veröffentlichungstag der Anmeldung:
**23.09.2020   Patentblatt 2020/39**

(73) Patentinhaber: **TRUMPF Laser- und Systemtechnik GmbH 71254 Ditzingen (DE)**

(72) Erfinder:
• **MAURER, Dominik 70195 Stuttgart (DE)**
• **SPIEGELHALDER, Roland 71229 Leonberg (DE)**

(74) Vertreter: **Trumpf Patentabteilung Trumpf SE + Co. KG TH550 Patente und Lizenzen Johann-Maus-Straße 2 71254 Ditzingen (DE)**

(56) Entgegenhaltungen:
**EP-A1- 3 053 674       EP-A1- 3 081 323
EP-A1- 3 127 635       EP-A1- 3 199 327
EP-A1- 3 621 758       DE-A1-102015 217 469
US-A1- 2016 233 060**

• B K Foster ET AL: "Optical, layerwise monitoring of powder bed fusion", Proceedings: 26th Annual International Solid Freeform Fabrication Symposium - An Additive Manufacturing Conference, 12. August 2015 (2015-08-12), Seiten 295-307, XP055536185, Gefunden im Internet: URL:http://sffsymposium.engr.utexas.edu/sites/default/files/2015/2015-24-Foster.pdf [gefunden am 2018-12-18]

(52) Gemeinsame Patentklassifikation (CPC): (Forts.)
B33Y 30/00; B33Y 50/02; C04B 2235/6026;
C04B 2235/665; Y02P 10/25

**Beschreibung**

Die vorliegende Erfindung betrifft ein Verfahren der, insbesondere laserbasierten, generativen Fertigung von dreidimensional erzeugten Bauteilen, die einen Überhangbereich aufweisen. Ferner betrifft die Erfindung eine Vorrichtung zur generativen Fertigung.

Die laserbasierte generative Fertigung von, insbesondere metallischen oder keramischen, Bauteilen basiert auf einem Verfestigen eines auf einer Bauplattform, z. B. in Pulverform vorliegenden, Ausgangsmaterials durch die Bestrahlung mit Laserlicht. Dieses Konzept - auch als selektives Laserschmelzen (SLM: selective laser melting) oder als Pulverbettfusion bekannt - wird unter anderem in Maschinen für den (metallischen) 3D-Druck eingesetzt. Im Fall des auf einem metallischen Pulver basierenden 3D-Drucks spricht man auch von Laser-Metal-Fusion (LMF)-Anlagen. Eine beispielhafte Maschine zur generativen Fertigung von dreidimensionalen Produkten ist in der europäischen Patentanmeldung EP 2 732 890 A2 der Sisma S.p.A. offenbart. Die Vorteile der generativen Fertigung sind allgemein eine einfache Herstellung von komplexen und individuell erstellbaren Teilen.

Die hierin offenbarten Aspekte beziehen sich insbesondere auf die Auswirkung des generativen Fertigungsprozesses auf oberflächennahe Bereiche eines Bauteils. Diese auch als Hülle (oder "Skin") bezeichneten Bereiche umfassen Bereiche an der Oberseite, an der Unterseite und an den Seiten eines Werkstücks. Die oberflächennahen Bereiche werden hierin entsprechend auch als Upskin-Bereiche (Hüllenbereiche auf der Einfallsseite des Laserstrahls), Downskin-Bereiche (Hüllenbereiche auf der dem Laserstrahleinfall abgewandten Seite) und Sideskin- (oder Inskin-) Bereiche (Hüllenbereiche, die sich im Wesentlichen entlang der Laserstrahlrichtung erstrecken) bezeichnet.

Beispielsweise wird in Kapitel I "Additive Manufacturing of Al Alloys and Aluminium Matrix Composites (AMCs)" des Buchs "Light Metal Alloys Applications" (ISBN 978-953-51-1588-5; 11. Juni 2014) eine derartige Klassifizierung in derartige Bereiche und die Zuordnung verschiedener Parameter zu den Bereichen beschrieben.

Ein Downskin-Bereich des Bauteils erstreckt sich allgemein dort, wo der entstehende Bauteilabschnitt in Laserstrahlrichtung auf Pulver erzeugt wird. Ein Upskin-Bereich des Bauteils wird in nachfolgenden Beschichtungsprozessen mit Pulver bedeckt, das nicht bestrahlt wird. Ein Upskin-Bereich bildet üblicherweise eine Oberfläche des Bauteils auf der Seite des Laserstrahleinfalls. Ein Downskin-Bereich erstreckt sich beispielsweise entlang der Unterseite des Werkstücks, hier im Sinne der ersten bestrahlten Lagen, oder entlang der Unterseite eines Überhangbereichs des Bauteils. Ein Sideskin-Bereich stellt einen seitlichen Rand des Bauteils dar, der durch das laterale Ausmaß der Bestrahlung in der Schichtebene gegeben ist. Entsprechend grenzt er seitlich an unbestrahltes Pulver. Die Hüllenbereiche umschließen den inneren Bereich des Bauteils oder eines Abschnitts desselben. Dieser wird oft auch als Kern (oder "Core") des Bauteils bezeichnet.

Die Auswirkungen des generativen Fertigungsprozesses auf diese oberflächennahen Bereiche betreffen beispielsweise die Stabilität, Formtreue und Oberflächenqualität des Bauteils. Diese Auswirkungen bestimmen somit auch, ob ein Bauteil mit einer geplanten Geometrie noch derart gefertigt werden kann, dass es den jeweiligen Produktanforderungen gerecht wird. Beim Aufbau von LMF-Bauteilen aus Stählen durch pulverbettbasiertes Laserschmelzen sind beispielsweise überhängende Oberflächen mit (Überhang-) Winkeln unterhalb eines sogenannten kritischen Winkels (z. B. von unter ca. 60° bzgl. der Senkrechten) bezüglich einer Schichtebene oft nur mit Qualitätsabschlägen herstellbar. So offenbart die EP 1 720 676 B1, dass die Belichtung einer Pulverschicht im Überhangbereich zu einer Schmelze führen kann, die über die einzelne Schicht hinaus wirkt und die formtreue Fertigung erschwert.

Ein beispielhafter Ansatz zur Gewährleistung einer hohen Formtreue bei der Bestrahlung von Schichten im Überhangbereich wird in der EP 3 127 635 A1 der Anmelderin beschrieben. Dabei wird in jeder Schicht des Überhangbereichs in der Nähe der Bauteilkontur insbesondere im Downskin-Bereich die Belichtungsenergie herabgesetzt. Das Herabsetzen der Belichtungsenergie beim Bestrahlen einer Schicht kann dabei in Stufen und überhangwinkelabhängig vorgenommen werden.

Die Bestimmung der Parameter eines generativen Fertigungsprozesses für ein spezifisches Pulver erfolgt in speziellen Prüfverfahren. Relevant sein können hierbei bspw. die Materialart, Korngrößenverteilung und Kornform des Pulvers. Dabei wird beispielsweise die einzubringende Energiedichte bestimmt. Das allgemeine Ziel bei der Bestimmung der Parameter eines generativen Fertigungsprozesses ist es dabei, bei der Fertigung einen hochenergetischen Laserstrahl mit hoher Scangeschwindigkeit einzusetzen, um eine ausreichend hohe Geschwindigkeit im Fertigungsprozess zu erreichen.

Üblicherweise setzen diese Prüfverfahren die Fertigung entsprechend ausgelegter Prüfobjekte für die jeweiligen Fertigungsszenarien der additiven Fertigung ein. Prüfobjekte weisen hierzu Strukturen auf, die zur Parameterbestimmung ausgelegt sind. So weisen Prüfobjekte z. B. einen Überhang mit einer linearen Fläche, die sich unter einer Neigung eines zu erreichenden kritischen Winkels erstreckt, und/oder einen Abschnitt mit einer gekrümmten Oberfläche und/oder einen Abschnitt, der einen Überhang mit einer linearen Fläche aufweist, die sich flacher als der kritische Winkel erstreckt, auf.

Zusätzlich zu den Energiedichten für Kernbereiche können auch die Parameter für Inskin- und Downskin-Bereiche definiert werden. Wird eine Reihe von Überhangwinkeln bei angestrebten Laserparametern getestet, kann überdies der bereits angesprochene kritische Winkel bestimmt werden, ab dem z. B. Stützstrukturen notwendig werden.

Die Prüfverfahren basieren üblicherweise auf einem Testfertigungsvorgang, bei dem auf einer Grundplatte eine Mehrzahl von gleichen Prüfobjekten erstellt wird. Für jedes der Prüfobjekte werden eigene Parameter des Fertigungsprozesses umgesetzt. Die Prüfobjekte werden anschließend hinsichtlich ihrer Qualität bewertet. Dazu werden sie insbesondere hinsichtlich Festigkeit, Dichte, Verformung, Farbgebung, etc. untersucht. Auf diese Weise kann z. B. mit einem Testfertigungsvorgang und einer entsprechend großen Anzahl von Prüfobjekten und Parametersätzen ein erster Parameterbereich bestimmt werden, der dann in nachfolgenden Testfertigungsvorgängen verfeinert wird. Zu variierende Parameter können bspw. Energie, Fokusdurchmesser und -form und/oder Scangeschwindigkeit eines Laserstrahls darstellen, aber auch die aufgetragene Schichtdicke des Pulvers.

Um die geeignete Energiedichte in einem Kernbereich und einem Downskin-Bereich des Prüfobjekts zu bestimmen, kann für eine spezifische Prüfobjektstruktur beispielsweise ausgehend von einem 100%-Wert einer vorgegebenen Energiedichte eine stufenweise Energiedichtereduzierung bei gleichbleibender Schichtdicke vorgenommen werden.

Diese Parameter kann der Betreiber von Maschinen für die generative Fertigung, aber auch der Pulverlieferant oder der Maschinenhersteller für den Betreiber ermitteln.

In einigen Technologiesegmenten kann beispielsweise für die Fertigung ohne Stützkonstruktionen eine umsetzbare Neigung unter einem kritischen Winkel von 45° oder steiler vom Markt gefordert werden. Die Relevanz des kritischen Winkels hinsichtlich vorzusehender Stützstrukturen bei der Fertigung wird z. B. in "Design Optimisation for Selective Laser Melting (SLM) and Experimental Testing of an Aircraft Component", L. M. R. Seabra, Thesis to obtain the Master of Science Degree in Aerospace Engineering, Tecnico Lisboa, May 2015 diskutiert.

Das Dokument EP 3053674 A1 beschreibt ein Verfahren zur additiven Herstellung eines Werkstücks. Das Werkstück weist dabei eine Vorderseite mit einer Höckerstruktur auf, wobei eine Abgrenzung der Höckerstruktur mindestens eine geneigte Leiste und mindestens eine überhängende Leiste umfasst. Die überhängenden Leisten sind derart angeordnet, dass sie einen Winkel mit der Aufbaurichtung bilden, der kleiner oder gleich 70 Grad ist. Derartige Höckerstrukturen können bezogen auf die umliegende Werkstückoberfläche als Einbuchtung oder als Ausbuchtung ausgebildet sein.

Auch das Dokument US 2016/0233060 A1 offenbart ein Verfahren zur additiven Herstellung eines Werkstücks mit einer texturierten Oberfläche. Die texturierte Oberfläche kann dabei eine Vielzahl von unabhängigen Makro- und Mikromerkmalen umfassen, die integral mit dem Werkstück ausgebildet sind. Die äußere Schicht ("outer layer") des Werkstücks kann aus einem anderen Material (z.B. Keramik) als das Grundmaterial ("base material") ausgebildet sein.

Im Zusammenhang mit additiven Fertigungsverfahren beschreibt das Dokument Foster et al, "Optical, layerwise monitoring of powder bed fusion", 12. August 2015, Seiten 295 bis 307 bildgebende Verfahren, mittels denen Prozessfehler und Defekte im gefertigten Werkstück im laufenden Prozess erkannt werden können.

DE 10 2015 217 469 A1 offenbart Verfahren und Vorrichtungen zum Herstellen von dreidimensionalen Objekten. Dabei wird ein zu erzeugendes Objekt mit einem Hüllbereich umgeben. Nach Fertigstellung des Objekts wird der Hüllbereich entfernt und das Objekt freigelegt. Während des Fertigungsvorgangs wird im Hüllbereich bevorzugt weniger Energie eingebracht als in das Objekt. Dazu kann beispielsweise gemäß der für das Jahr ein die Laserleistung verringert, der Abstand zwischen benachbarten Laserscanlinien in einem Hatch (Hatchdistanz in einer Schichtebene) vergrößert oder die Geschwindigkeit der Abtastung erhöht werden. EP 3 199 327 A1 offenbart ein Verfahren zur Kalibrierung eines additiven Herstellungsvorgangs. Insbesondere werden Laser- oder Scankopf-Einstellungen einer additiven Fertigungsvorrichtung kalibriert. Der Kalibrierungsvorgang erfolgt dabei in einer Schichtebene (single layer test). Die Kalibrierung betrifft insbesondere fehlerhafte Schmelzmuster, die beispielsweise entstehen können, wenn ein Laser zu früh oder zu spät am Anfang einer Hatch-Linie eingeschalten wird oder zu früh oder zu spät am Ende einer Hatch-Linie ausgeschalten wird.

EP 3 621 758 A1 offenbart ein Verfahren zur generativen Fertigung eines dreidimensionalen Bauteils aus einem Pulver.

Einem Aspekt der vorliegenden Erfindung liegt die Aufgabe zugrunde, ein generatives Fertigungsverfahren vorzuschlagen, das den Aufbau von Überhangbereichen ermöglicht. Eine weitere Aufgabe liegt darin, eine generative Fertigung zu ermöglichen, die möglichst unabhängig von der Bewegungsrichtung eines Beschichters geplant werden kann. Eine weitere Aufgabe liegt darin, ein generatives Fertigungsverfahren vorzuschlagen, das den Aufbau von Überhangbereichen auch mit Pulverschichtdicken im Bereich der Pulverkorngröße ermöglicht.

Zumindest eine dieser Aufgaben wird gelöst durch ein Verfahren zur generativen Fertigung eines dreidimensionalen Bauteils aus einem Pulver nach Anspruch 1 und durch eine Fertigungsvorrichtung zur generativen Fertigung nach Anspruch 5. Weiterbildungen sind in den Unteransprüchen angegeben.

In einem Aspekt weist ein Verfahren zur generativen Fertigung eines dreidimensionalen Bauteils aus einem Pulver die folgenden Schritte auf:

- Unterteilen eines Schichtstrukturmodells des zu fertigenden Bauteils in einen Kernbereich und einen an den Kernbereich angrenzenden Hüllenbereich, wobei der Hüllenbereich zumindest einen Abschnitt der Oberfläche des dreidimensionalen Bauteils ausbildet, und

- Durchführen eines schichtbasierten Bestrahlungsvorgangs auf Grundlage des Schichtstrukturmodells, bei dem eine Dichte von bestrahlten Pulverschichten im Hüllenbereich niedriger ist als im in Schichtebenenrichtung angrenzenden Kernbereich, wobei die Dichte durch die Anzahl von bestrahlten Schichten in Richtung der Normalen der Pulverschichten pro Längeneinheit gegeben ist, wobei das Bauteil eine Überhangstruktur aufweist und durch selektives Laserschmelzen auf einer Bauplattform gefertigt wird, die folgenden Schritten:

- Bereitstellen eines Bestrahlungsplans basierend auf einem Schichtstrukturmodell des dreidimensionalen Bauteils, wobei das Schichtstrukturmodell eine Sequenz von Schichten umfasst, denen jeweils eine schichtspezifische Kontur des Bauteils zugeordnet ist, wobei die Sequenz eine erste Untergruppe von Schichten und eine zweite Untergruppe von Schichten umfasst, die ineinander verschachtelt sind, und wobei bei der ersten Untergruppe von Schichten im Bereich der Überhangstruktur eine Bestrahlung des Pulvers bis zur Kontur geplant ist, und bei der zweiten Untergruppe von Schichten im Bereich der Überhangstruktur eine Bestrahlung des Pulvers nur bis zu einem Abstand von der Kontur geplant ist, und

- Durchführen eines sequentiellen Auftragens von Pulverschichten auf der Bauplattform und Bestrahlung der Pulverschichten mit Bestrahlungsparametern des Laserstrahls gemäß dem Bestrahlungsplan.

In einem weiteren Aspekt umfasst eine Fertigungsvorrichtung zur generativen Fertigung eines dreidimensionalen Bauteils aus einem Pulver einen eine Arbeitsfläche bereitstellenden Fertigungsraum, der einen Plattformbereich umfasst, und einen Bauzylinder, der einen in der Höhe verfahrbaren Träger aufweist, auf dem das dreidimensionale Bauteil auf einer Oberfläche einer Bauplattform schichtweise hergestellt werden soll. Ferner umfasst die Fertigungsvorrichtung eine Schiebevorrichtung mit einem Beschichter zum Erzeugen von Pulverschichten mit dem Pulver im Plattformbereich, ein Bestrahlungssystem zur Erzeugung eines Strahls für die Bestrahlung der Pulverschichten im Plattformbereich zum schichtweisen Herstellen des dreidimensionalen Bauteils und eine Steuerungseinheit, die basierend auf Bestrahlungsdaten eines Bestrahlungsplans des dreidimensionalen Bauteils die Fertigung des dreidimensionalen Bauteils nach einem wie hierin beschriebenen Verfahren steuert. Dabei können die Bestrahlungsdaten zu bestrahlende Bereiche der Pulverschichten definieren, die zu bestrahlenden Bereiche können einen Hüllenbereich und einen Kernbereich umfassen und eine Dichte von bestrahlten Pulverschichten im Hüllenbereich kann niedriger sein als im Kernbereich.

Man erkennt, dass die hierin offenbarten Konzepte einen Vergleich von Dichten von bestrahlten Schichten vornehmen, der auf mehreren benachbarten Schichten des Schichtmodells basiert. In anderen Worten, wird ein Hüllenbereich oder ein Teil des Hüllenbereichs mit dem in Schichtebenenrichtung angrenzenden Kernbereich (oder einem angrenzenden Teil des Kernbereichs) hinsichtlich der Dichte von bestrahlten Schichten verglichen.

In einigen Ausführungsformen kann der schichtbasierte Bestrahlungsvorgang ein sequentielles Aufbringen von Pulverschichten umfassen, die Pulverschichten können mit einem Kernenergieeintrag bestrahlt werden und die Schichten im Hüllenbereich einer schichtselektiven Bestrahlung unterliegen werden. Bei einer schichtselektiven Bestrahlung des Hüllenbereichs kann die Dichte von bestrahlten Pulverschichten in Abhängigkeit von der Oberflächengeometrie des dreidimensionalen Bauteils variiert werden. Insbesondere kann die Dichte von bestrahlten Pulverschichten im Bereich einer Überhangstruktur umso mehr reduziert wird, je größer der Abstand zwischen Konturen (benachbarter Schichten) ist, und insbesondere je flacher die Überhangstruktur zur, durch die Oberfläche des Pulverbetts gegebenen, Schichtebene verläuft.

In einigen Ausführungsformen kann im Hüllenbereich oder in einem Abschnitt des Hüllenbereichs nur jede n-te Schicht der aufgebrachten Pulverschichten bestrahlt werden oder es kann im Hüllenbereich oder in einem Abschnitt des Hüllenbereichs jede n-te Schicht der aufgebrachten Pulverschichten nicht bestrahlt werden.

In einigen Ausführungsformen kann die Bestrahlung innerhalb einer Pulverschicht, insbesondere im gesamten Bauteil, im Kernbereich und im Hüllenbereich mit gleicher Laserleistung vorgenommen werden. Dabei kann der Energieeintrag im Hüllenbereich trotz gleicher Laserleistung aufgrund einer schichtselektiven Bestrahlung im Vergleich zum Kernbereich reduziert werden.

In einigen Weiterbildungen kann im Hüllenbereich oder in einem Abschnitt des Hüllenbereichs eine bestrahlte Pulverschicht mit einer bestrahlten Pulverschicht im Kernbereich zusammenfallen und wobei diese Pulverschicht im Hüllenbereich und im Kernbereich in einem gemeinsamen Bestrahlungsvorgang (d. h., als eine Schicht) bestrahlt wird.

In einigen Ausführungsformen kann beim Durchführen des schichtbasierten Bestrahlungsvorgangs in einem Hüllenbereich, dem in Schichtebenenrichtung kein angrenzender Kernbereich zugeordnet ist, insbesondere an der Unterseite des zu fertigenden Bauteils, Inskin-Parameter verwendet werden, die für eine Dichte von bestrahlten Pulverschichten in einem Kernbereich vorgesehen sind, die höher ist, als die Dichte der Pulverschichten im diesem Hüllenbereich. Auch hier erkennt man, dass die hierin offenbarten Konzepte einen Vergleich von Dichten von bestrahlten Schichten vornimmt, der auf mehrere benachbarten Schichten des Schichtmodells basiert.

In einigen Ausführungsformen kann eine aufgebrachte Pulverschicht eine Dicke im Bereich einer mittleren Korngröße des Pulvers aufweisen. Diese kann insbesondere im Bereich von 30% bis 300% der mittleren Korngröße des Pulvers liegen.

In einigen Ausführungsformen kann das Ausmaß des Hüllenbereichs durch einen Abstand der Kontur vom bestrahlten Bereich einer Schicht, deren Bestrahlung nicht bis an den Konturverlauf des dreidimensionalen Bauteils erfolgt, bestimmt werden. Alternativ oder zusätzlich kann die Anzahl von aufeinanderfolgenden Schichten, deren Bestrahlung nicht bis an den jeweiligen Konturverlauf des dreidimensionalen Bauteils erfolgt, das Ausmaß des Hüllenbereichs bestimmen.

In einigen Ausführungsformen kann zum Auftragen der Pulverschichten Pulver mit einem Beschichter aus einem Vorratsbereich in einer Auftragsrichtung aufgetragen werden und die Überhangstruktur kann derart gegen die Auftragsrichtung ausgerichtet sein, dass die Kontur mindestens einer nachfolgend zu bestrahlenden Schicht im Bereich der Überhangstruktur näher als die Kontur einer zuvor bestrahlten Schicht an den Vorratsbereich heranragt. Ferner können die Bestrahlungsparameter des Laserstrahls entsprechend der gewünschten Wechselwirkung des Laserstrahls mit dem Pulver in einem Kernbereich des Bauteils fest eingestellt sein.

In einigen Ausführungsformen kann im Schichtstrukturmodell eine Schicht in, insbesondere rechteckige, Bestrahlungsfelder unterteilt werden, wobei im Bestrahlungsvorgang in Bestrahlungsfelder im Hüllenbereich, insbesondere im konturnahen Bereich der Schicht, ein Energieeintrag vorgenommen wird, der gegenüber dem Energieeintrag im Kernbereich, insbesondere in konturfernen Bestrahlungsfeldern, reduzierter ist. Dabei können die Bestrahlungsfelder einer Schicht, die von der Kontur der Schicht geschnitten werden, nur im, das Bauteil bildenden, Innenbereich bestrahlt werden.

In Weiterbildungen kann der Beginn der Bestrahlung mit einem reduzierten Energieeintrag im Bereich derjenigen Bestrahlungsfelder beginnen, die von einer, insbesondere in Schichtrichtung, auf die Schicht projizierten Kontur einer Schicht geschnitten werden, wobei diese Schicht im Hüllenbereich bis zur Kontur bestrahlt wurde.

Allgemein können die Bestrahlungsfelder eines Bestrahlungsplans, die von einer auf die Schicht, insbesondere in Schichtrichtung, projizierten Kontur geschnitten werden, als Ganzes mit dem reduzierten Energieeintrag oder als Ganzes mit dem Energieeintrag des Kernbereichs bestrahlt werden.

Hierin ist die Dichte von bestrahlten Pulverschichten durch die Anzahl von bestrahlten Schichten in Richtung der Normalen der Schichtebene (Schichtungsrichtung) und pro Längeneinheit gegeben. Die Schichtebene ist durch die plane Pulverbettoberfläche gegeben, die durch den Pulverauftrag mit dem Beschichter erzeugt wird. Wird - wie es im Kernbereich üblicherweise der Fall ist - jede Schicht bestrahlt, ist die Dichte maximal. Bei dünnen Schichten werden beispielsweise 25 Schichten bestrahlt, um eine Materialdicke (in Normalenrichtung) von 1 mm zu erzeugen. Werden Schichten bei der Bestrahlung im Hüllenbereich ausgelassen, reduziert sich dort die Dichte. Sie halbiert sich zum Beispiel, wenn abwechselnd eine Schicht bestrahlt wird und eine nicht bestrahlt wird, oder sie drittelt sich, wenn nur jede dritte Schicht bestrahlt wird. Bei gleichen Parametern der Laserstrahlung reduziert sich der Energieeintrag entsprechend. Eine reduzierte Dichte von bestrahlten Pulverschichten führt zu einer reduzierten (von der Bestrahlung in das Pulver eingebrachten) Volumenenergie (in [J/m^3]), wobei diese sich im Wesentlichen ergibt aus:

$$\text{Volumenenergie} = \text{Laserleistung} / (\text{Schichtdicke} * \text{Scangeschwindigkeit} * \text{Spurabstand})$$

Hierin ist ferner der Kernenergieeintrag die Energie, die mit der Bestrahlung im Mittel in das Pulver eingebracht werden muss, um die gewünschte, pulverspezifische Wechselwirkung (meist der Grad der Aufschmelzung aufgrund der zugeführten Volumenenergie) zu erhalten, die für den Kernbereich des Bauteils vorgesehen ist.

In diesem Zusammenhang sei erwähnt, dass bei größeren Schichtstärken eine reduzierte Volumenenergie benötigt wird, denn durch die höhere Schichtstärke werden darunterliegende Schichten weniger stark aufgeschmolzen. So wird weniger Wärme in die darunterliegenden Schichten abgeführt und im Ergebnis kann bei einer größeren Schichtstärke eine geringere Volumenenergie notwendig sein, um eine hohe Bauteildichte zu erreichen.

Beispielhafte Vorteile von Ausführungsformen der hierin offenbarten Konzepte umfassen eine sehr gute Baubarkeit von 45°-Überhangsschrägen entgegen der Bewegungsrichtung des Beschichters beim Pulverauftrag sowie eine Baubarkeit von starken Überhängen entgegen der Bewegungsrichtung des Beschichters, z. B. von Überhangwinkeln bis zu 30° oder weniger. Dies erlaubt in vielen Fällen eine Reduzierung von Stützstrukturen, wenn nicht sogar einen stützfreien Aufbau derartiger Geometrien. Überdies kann so auch ein Aufbau von innen im Bauteil liegenden Überhängen möglich werden, die oft nicht gestützt werden können bzw. deren Stützstrukturen nach der Fertigung nicht mehr entfernt werden können. Innen liegende Überhänge können somit durch die der hierin offenbarten Konzepte formgetreuer gefertigt werden.

Weitere Vorteile betreffen den Energieeintrag und die Laserstrahlung. So kann die Fertigung des Downskin-Bereichs in einen dem Kern zugeordneten Prozessschritt integriert werden, wobei der zeitliche Energieeintrag in den Überhang trotzdem kleiner als bei der Belichtung des Kerns gehalten werden kann. Es erfolgt eine Reduzierung des Energieeintrags in den Hüllenbereich, insbesondere in den Downskin-Bereich, wodurch eine bessere Oberflächenqualität und Baubarkeit erreicht werden kann. Die durchgängige Belichtung von Hüllen- und Kernbereichen kann mit einer einfachen Belichtungsstrategie umgesetzt werden, begleitet von einem gleichmäßigen Energieeintrag, der durch große Bewegungsvektoren umgesetzt werden kann, die sich in den Überhang hinein erstrecken.

Mit anderen Worten muss keine separate Belichtungsstrategie (hinsichtlich insbesondere der Laserparameter) mehr für den Downskin-Bereich festgelegt werden, da die hierin vorgeschlagene selektive Belichtung des z. B. Downskin-Bereichs die Belichtung des Kerns selektiv in den Hüllenbereich fortsetzt. So müssen zusätzlich zu den Inskin-Parametern für das Lasersystem, d. h., Parametern für das Lasersystem, die den Energieeintrag in den Kern (Inskin-Bereiche mit seitlichen Flächen des Bauteils, d. h., es gibt keine Upskin- oder Downskin-Anpassung) definieren (u. a. Laserleistung, Fokusgröße, Scangeschwindigkeit und Pulverschichtdicke), keine Downskin-Parameter mehr für das Lasersystem entwickelt werden. Allgemein kann sich die Parameterentwicklung für die Fertigung von Überhängen deutlich vereinfachen. Dies vereinfacht die Parameterentwicklung insbesondere für verschiedene Werkstoffe durch Reduzierung der relevanten, bei der Planung zu berücksichtigenden, Parameter. Im Gegensatz zur eingangs erwähnten EP 3 127 635 A1, bei der Überhänge in kleine Bereiche aufgeteilt werden und bei der für diese kleinen Bereiche die Energie in einem komplizierten, winkelabhängigen Verfahren in Abhängigkeit vom Abstand zur Oberfläche gewonnen wird, ist die Energie nun ein quasi feststehender Parameter. Mit anderen Worten kann eine gleichmäßige, wenn auch schichtweise selektive, Belichtung mit den Inskin-Parametern des Laserstrahls durchgeführt werden.

Die hierin vorgeschlagenen Konzepte können es ferner erlauben, dass Stützstrukturen entfallen, die oft beim Bauen von überhängenden Bereichen, die entgegen der Beschichterbewegungsrichtung ausgerichtet sind, zur Vermeidung von Verzerrung des Bauteils vorgesehen werden müssen. D. h., die Konstruktion sowie die oft manuelle Entfernung der Stützstrukturen nach dem Bauprozess können entfallen, wodurch die Bauteilkosten durch die geringere Datenvorbereitung und Nacharbeit reduziert werden. Allgemein kann sich die Oberflächenqualität der sonst gestützten Flächen erhöhen.

In einigen Ausführungsformen der hierin offenbarten Konzepte kann eine selektive Belichtung von Schichten auch lediglich in Downskin-Bereichen angewendet werden, die unterhalb eines kritischen Winkels liegen. Ohne Umsetzung der selektiven Belichtung sind derartige Downskin-Bereiche u. U. nur mit Stützstrukturen baubar.

Die hierin offenbarte Vorgehensweise kann überraschender Weise nachteilige Aspekte aus dem Stand der Technik beheben, wie z. B. Verfärbungen von Überhängen, Verzug und Deformation des Bauteils bis hin zu Prozessabbrüchen bei zu starken Deformationen, die zu einer Kollision von hochgezogenen Überhangkante mit der Beschichterklinge führen können.

Beispielsweise kann ein möglicher leichter Verzug der Überhangkante durch eine effektiv größere Schichtdicke im Downskin-Bereich insbesondere bei Überhängen, die sich entgegen der Beschichterbewegung erstrecken, ausgeglichen werden. So wird ein Pulverstau vor dem Bauteil verringert oder sogar vermieden, welcher anderfalls den Verzug der Überhangkante verstärken könnte.

Eine mögliche Erklärung für einige der positiven Effekte der hierin offenbarten Konzepte kann im Zusammenhang mit der Korngrößenverteilung des verwendeten (Metall-) Pulvers stehen. Aufgrund der Korngrößenverteilung kann Pulver mit mittlerer Korngröße von z. B. 30 $\mu$m eine größere Anzahl an Körnern mit Größen von z. B. 15 $\mu$m bis 45 $\mu$m aufweisen. Insbesondere beim Aufbau von Überhangbereichen ist es üblich, dünne Pulverschichten aufzutragen, damit das Bauteil nicht "stufig" wirkt. Entsprechend wenig wird der Beschichter über die Fertigungsebene angehoben. Dies führt dazu, dass z. B. beim Auftrag von 40 $\mu$m dünnen Schichten die größeren Körner nicht mehr zwischen Beschichter und Bauteil passen und so vom Beschichter mitgenommen werden. Die größeren Körner können dabei an der dem Beschichter zugewandten Seite des Bauteils hängen bleiben. Sie können dann entweder nach unten in die zuletzt bestrahlte Schicht gedrückt werden oder sie können, angeschoben vom Beschichter, die dünnen, bereits belichteten Überhangschichten nach oben mitnehmen. Dadurch kann die Maßhaltigkeit gestört werden. Zudem kann es beim nächsten Pulverauftrag zu noch größeren Auswirkungen bis hin zum Prozessabbruch kommen.

Wird jedoch wie hierin vorgeschlagen die Dichte von bestrahlten Schichten im Hüllenbereich reduziert, z. B. nur jede n-te Schicht bestrahlt, entspricht dies zumindest teilweise einer dickeren Beschichtung mit Pulver mit entsprechend weniger Auswirkung auf den Fertigungsprozess. Beispielsweise kann schon das Belichten von nur jeder zweiten Schicht im Hüllenbereich dazu führen, dass an der dünnen und labilen Vorderkante des Bauteils, in der Richtung aus der der Beschichter kommt, eine im Wesentlichen doppelt so dicke, im vorausgehenden Beispiel entsprechend 80 $\mu$m dicke, Pulverschicht aufgebaut wird. Im dazwischen im Kernbereich vorgenommenen Beschichtungsvorgang können größere Körner nun nur weiter im Bauteilinneren hängen bleiben und wirken sich so nicht auf den oberflächennahen Bereich des Bauteils, insbesondere die dortige Qualität der Oberfläche, aus.

Zur Vollständigkeit wird auf die beispielsweise in der DE 10 2011 105045 B3 beschriebenen Vorgehensweisen einer speziellen "Hülle-Kern-Strategie" verwiesen, wobei die zuvor zusammengefassten Konzepte sich davon unterscheiden bzw. ergänzend insbesondere zur nachfolgend beschriebenen Vorgehensweise bei Übergängen zwischen unterschiedlichen Bestrahlungsstrategien eingesetzt werden können.

Zur kurzen Erläuterung des bekannten Konzepts der "Hülle-Kern-Strategie" wird dabei das Bauteil in einen Hüllenbereich und einen Kernbereich aufgeteilt, wobei diese beiden Bereiche (vollständig) unabhängig voneinander parametriert werden können. Auch die Belichtungsstrategien in den Bereichen können unabhängig voneinander vorgesehen werden und entsprechend an einer Grenzlinie zwischen den Bereichen im Bauteilinneren wechseln. So kann im Hüllenbereich beispielsweise eine vergleichsweise dünne Pulverschichtdicke und geringe Laserleistung und im Kernbereich eine vergleichsweise dicke Pulverschichtdicke und eine hohe Laserleistung vorgesehen werden, wobei die Schichtdicke des Kernbereichs üblicherweise ein Vielfaches der Schichtdicke des Hüllenbereichs ist. Hinsichtlich der Belichtungsstrategie kann im Kernbereich eher eine Schachbrett- oder Streifenbelichtung vorgesehen werden, wogegen im Randbereich eher eine Offset-Filling-Strategie oder eine Vielzahl von Konturen umgesetzt werden können. So kann im Kernbereich eine hohe Aufbaurate bzw. Produktivität erreicht werden. Im Hüllenbereich mit seinen eigenen Prozessparametern kann dagegen eine nach au-ßen hin gute Oberflächenqualität erzeugt werden, die insbesondere nur mit einer geringeren Schichtdicke erreicht werden kann.

Im Unterschied zu dieser Hülle-Kern-Strategie erfordert die hierin beschriebene Vorgehensweise bei der schichtselektiven Belichtung keine echte Differenzierung in einen "Hüllenbereich" und einen "Kernbereich". Bei der vorgeschlagenen selektiven Belichtung kann zum einen die Belichtung (insbesondere die vorgesehenen Laserparameter) des Bauteilinneren bis zur Außenkontur stufenlos angewandt werden und zum anderen kann die Belichtungsfläche schichtweise in den Downskin-Bereichen etwas verkleinert werden, um in der jeweiligen Schicht außerhalb des reduzierten Kernbereichs keine Energie einzubringen. Somit muss es keinen getrennt parametrierbaren "Hüllenbereich" geben, im Unterschied zur zuvor beschriebenen konventionellen "Hülle-Kern-Strategie". Vielmehr kann durch eine in gewissen Rhythmen erfolgende Verkleinerung der Belichtungsfläche eine Art Hüllenbereich erzeugt werden, der sich jedoch nur in der Schichtstärke vom "Kernbereich" im Bauteilinneren unterscheidet und vor allem immer durchgängig mit dem Kernbereich belichtet werden kann. Es können so u.a. gleiche Prozessparameter wie beispielsweise Laserleistung, Verfahrgeschwindigkeit und Hatch-Abstand eingesetzt werden und zwar mit einer durchgängigen Belichtungsstrategie wie beispielsweise einer reihenweisen Belichtung einer Schachfeldstruktur. Man erkennt, dass es gerade ein Vorteil der hierin beschriebenen selektiven Downskin-Belichtung ist, dass der Belichtungsvorgang durchgehend erfolgen kann und nicht getrennt für den Inskin-Bereich und den Downskin-Bereich zu parametrisieren ist.

Weitere Ausführungsformen beziehen sich auf die Übergänge zwischen unterschiedlichen Bestrahlungsstrategien. Dies betrifft insbesondere Bauteile, bei deren Aufbau im Hüllenbereich verschiedenen Zonen unterschiedliche Bestrahlungsstrategien zugrunde liegen, um die jeweilige Bauteilgeometrie optimal abzubilden. Die Zonen umfassen dabei insbesondere die Zonen für Downskin-, Upskin- und Inskin-Bereiche; d. h., bei der generativen Fertigung sind die Bestrahlungsstrategien im Hüllenbereich untergliedert in für nach unten geneigte, nach oben geneigte und/oder seitliche Flächen des Bauteils. Dabei können auch in den einzelnen Downskin-, Upskin- oder Inskin-Bereichen mehrere Zonen eingesetzt werden, um die Bestrahlungsstrategien weiter differenzieren zu können.

Es wurde nun von den Erfindern ferner erkannt, dass an der Oberfläche sichtbare Übersanslinien entstehen können, wenn der Übergang der Zonen und damit der Bestrahlungsstrategien sprunghaft an definierten Winkeln im Verlauf der Oberfläche des Bauteils erfolgt. Diese Übergangslinien können insbesondere das optische Erscheinungsbild des Bauteils beeinflussen, eine entsprechende Nachbearbeitung erfordern und/oder mechanische Eigenschaften des Bauteils negativ beeinflussen.

Um insbesondere die Optik und ggf. Form und mechanische Eigenschaften der Bauteile zu verbessern, schlagen die Erfinder nun ferner vor, einen Zonenübergang nicht starr anhand eines Grenzwinkels festzulegen, sondern diesen sukzessive erfolgen zu lassen. Für die technische Umsetzung eines sukzessiven Zonenübergangs werden verschiedene Möglichkeiten vorgeschlagen. Insbesondere ist ein Zonenübergang in einem näher zu definierenden Winkelbereich möglich.

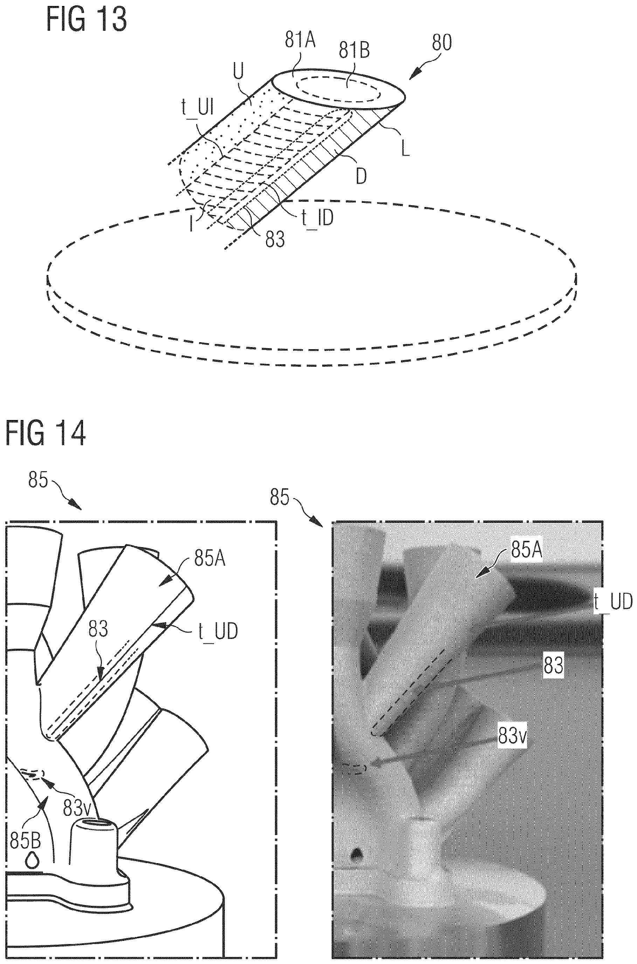

Wie nachfolgend auch anhand der Figuren 13 bis 16 erläutert wird, kann bei einem Bauteil ein Übergang zwischen Zonen in einer Schicht erfolgen, wenn diese Schicht sich über Hüllenbereiche erstreckt, denen unterschiedliche Oberflächenverläufe in Downskin-, Upskin- und Inskin-Bereichen zugeordnet sind. Diese werden hierin als Zonenübergänge in X-/Y-Richtung, d. h., in der Schichtebene, bezeichnet. Ferner können benachbarte Schichten unterschiedlichen Zonen zugeordnet werden, wenn diesen z. B. unterschiedliche Oberflächensteigungen zugeordnet sind, denen wiederum unterschiedliche Bestrahlungsstrategien zugewiesen werden. Dies wird hierin als Zonenübergang in Z-Richtung, d. h., über Schichten hinweg, bezeichnet.

Zusammenfassend können Fertigungsverfahren, insbesondere Weiterbildung der zuvor beschriebenen Verfahren, die folgenden Merkmale aufweisen:

In einigen Ausführungsformen weist die Oberfläche des dreidimensionalen Bauteils mindestens zwei aneinander angrenzende Zonen auf, denen mindestens zwei Bestrahlungsstrategien zugeordnet sind. Mindestens eine der Bestrahlungsstrategien weist den Bestrahlungsvorgang auf Grundlage des Schichtstrukturmodells auf, bei dem eine Dichte von bestrahlten Pulverschichten im Hüllenbereich niedriger ist als im in Schichtebenenrichtung angrenzenden Kernbereich. In einem die Oberfläche des dreidimensionalen Bauteils formenden Übergangsbereich der Zonen kann ein Wechsel zwischen den Bestrahlungsstrategien innerhalb einer Schicht derart vorgenommen wird, dass eine räumliche Position des Wechsels in einer Abfolge von benachbarten Schichten bidirektional variiert. Ergänzend oder alternativ kann ein mehrfaches Hin- und Zurückwechseln zwischen den Bestrahlungsstrategien in einer Abfolge von benachbarten Schichten entlang der Schichtaufbaurichtung vorgenommen werden.

In einigen Ausführungsformen können die mindestens zwei aneinander angrenzenden Zonen mindestens eine Bestrahlungszone für den Hüllenbereich und eine Bestrahlungszone für einen Abschnitt, der mit einem Bestrahlungsvorgang gemäß dem Kernbereich erzeugt wird, umfassen. Ergänzend oder alternativ können die mindestens zwei aneinander angrenzenden Zonen im Hüllenbereich ausgebildet sein und/oder die mindestens zwei aneinander angrenzenden Zonen Upskin-, Downskin- und/oder Inskin-Zonen umfassen.

In einigen Ausführungsformen kann die räumliche Position des Wechsels und/oder das Hin- und Zurückwechseln durch Zuordnung von Übergangsparametern, insbesondere von Zonenübergangswinkeln, in einem Winkelbereich um einen vorbestimmten Übergangswinkel bewirkt werden, wobei die Zuordnung insbesondere durch einen Zufallsalgorithmus oder nach einem vorgegebenen Muster erfolgt.

In einigen Ausführungsformen kann die räumliche Position des Wechsels und/oder das Hin- und Zurückwechseln durch Zuordnung eines vorbestimmten Übergangswinkels und Vergrößern oder Verkleinern sich aus dem Übergangswinkel ergebender Zonen bewirkt werden. Dabei kann das Vergrößern oder Verkleinern der sich aus dem Übergangswinkel ergebenden Zonen insbesondere durch einen Zufallsalgorithmus oder nach einem vorgegebenen Muster im Übergangsbereich erfolgen.

Weitere Aspekte umfassen ein Computerprogramm (oder ein Computerprogrammprodukt) und ein computerlesbares Medium, auf dem ein entsprechendes Computerprogramm gespeichert ist. Das Computerprogramm/Computerprogrammprodukt umfasst Befehle, die bei der Ausführung des Programms durch einen Computer, insbesondere durch eine computerimplementierte Steuerungseinheit zum Betreiben einer Fertigungsvorrichtung zur generativen Fertigung eines dreidimensionalen Bauteils, den Computer/die Steuerungseinheit dazu veranlassen, die hierin beschriebenen Verfahren zur generativen Fertigung eines dreidimensionalen Bauteils aus einem Pulver auszuführen/zu veranlassen.

Das Computerprogramm/ Computerprogrammprodukt und das computerlesbares Medium sind entsprechend zum Ausführen einer der zuvor genannten Verfahren vorgesehen. Das Computerprogramm kann auf einem nichtflüchtigen Speicher, der insbesondere als Teil einer Steuerungseinheit zum Betreiben einer Fertigungsvorrichtung zur generativen Fertigung eines dreidimensionalen Bauteils verwendet wird, abgelegt sein.

Das computerlesbare Medium und die Computerprogramme/Computerprogrammprodukte können ferner computerausführbare Instruktionen aufweisen, die dazu ausgelegt sind, eine Fertigungsvorrichtung zur generativen Fertigung eines dreidimensionalen Bauteils nach Anspruch 19 zu veranlassen/anzusteuern.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:

| | |
|---|---|
| Fig.1 | eine schematische räumliche Darstellung einer beispielhaften generativen Fertigungsvorrichtung, |
| Fig. 2 | eine schematische Schnittansicht der generativen Fertigungsvorrichtung aus Fig. 1 parallel zur XY-Ebene durch den Fertigungsraum, |
| Fig. 3 | eine schematische Schnittansicht der generativen Fertigungsvorrichtung aus Fig. 1 parallel zur XZ-Ebene durch den Fertigungsraum wie in Fig. 2 angedeutet, |
| Figuren 4A und 4B | schematische Skizzen zur Verdeutlichung von unterschiedlichen Dichten von bestrahlten Schichten im Downskin-Bereich und im Kernbereich, |
| Figuren 5A und 5B | schematische Schnittdarstellungen zur Verdeutlichung von beispielhaften Umsetzungen einer schichtselektiven Bestrahlung im Übergangsbereich zwischen Hülle und Kern, |
| Figuren 6A bis 6D | schematische Skizzen zur Verdeutlichung der schichtselektiven Bestrahlung in einer Aufsicht auf Schichten im Übergangsbereich zwischen Hülle und Kern, |
| Fig. 7 | eine schematische Schnittdarstellung eines weiteren Beispiels einer schichtselektiven Bestrahlung im Übergangsbereich zwischen Hülle und Kern, |
| Fig. 8 | eine schematische Schnittdarstellung eines Bauteils, das mit schichtselektiver Bestrahlung gefertigt wurde, |
| Fig. 9 | eine Aufnahme von mehreren Bauteilen, deren Überhangbereiche mit schichtselektiver Bestrahlung gefertigt wurden, |
| Fig. 10 | eine schematische Skizze zur Verdeutlichung von unterschiedlichen Dichten von bestrahlten Schichten allgemein im Hüllenbereich und im Kernbereich, |
| Fig. 11 | eine Skizze zur Verdeutlichung des möglichen Einflusses der Korngröße von Pulver bei dünnen Schichten, |
| Fig. 12 | eine Skizze zur Verdeutlichung der Verwendung von variierten Laserparametern bei der Bestrahlung konturnaher Bereiche, |
| Fig. 13 | eine Skizze zur Verdeutlichung verschiedener Zonen im Hüllenbereich eines gekippten zylindri- |

| | schen Bauteils, |
| Fig. 14 | eine Skizze zur Verdeutlichung von Übergangsbereichen von Zonenübergängen an der Oberfläche eines Testobjekts, |
| Fig. 15 | eine Skizze zur Verdeutlichung einer Glättung eines Zonenübergangs durch Einführen eines Übergangsbereichs in einer Schicht und |
| Fig. 16 | eine Skizze / ein Foto zur Verdeutlichung einer Glättung eines Zonenübergangs durch einen Übergangsbereichs in Schichtaufbaurichtung. |

Hierin beschriebene Aspekte basieren zum Teil auf der Erkenntnis, dass die tatsächliche Umsetzbarkeit einer gewünschten Geometrie oft mit dem Beschichtungsprozess und insbesondere mit der Bewegungsrichtung des Beschichters (Auftragsrichtung) zum entstehenden Bauteil korreliert. So wurde erkannt, dass es bei der Fertigung von oberflächennahen Bereichen, die gegen die Bewegungsrichtung des Beschichters zeigen, zu einem Prozessabbruch oder zu Bauteildefekten kommen kann. Die grundlegenden Vorteile von LMF-Verfahren im Sinne der Gestaltungsfreiheit und des endkonturnahen Aufbaus einer Geometrie wird durch eine derartige richtungsabhängige Baubarkeit von Überhängen sehr stark eingeschränkt. Dies berücksichtigend wurden die hierin offenbarten Konzepten erarbeitet, mit denen z. B. der Aufbau von Überhängen bei Stählen, die gegen die Beschichterbewegungsrichtung mit Überhangwinkeln von 60° und weniger zeigen, erfolgen kann.

Bei der generativen Fertigung werden üblicherweise Schichtmodelle verwendet, die auf einer Sequenz von Schichten basieren, denen jeweils eine schichtspezifische Kontur des zu erzeugenden Bauteils zugeordnet ist. Erfindungsgemäß wird hierin ein Bestrahlungsplan vorgeschlagen, der auf einem Schichtmodel basiert und der in der Nähe der Kontur des Bauteils in einer Schicht, erfindungsgemäß in der Nähe der Kontur in Downskin- und Sideskin-Bereichen, weniger Energie einbringt, indem nur noch jede z. B. zweite oder dritte (oder n-te) Schicht belichtet wird (oder z. B. jede zweite oder dritte (oder n-te) Schicht nicht belichtet wird), wobei die Belichtung aber mit der im Wesentlichen gleichen, (vollen) Leistung der Laserstrahlung erfolgt, wie sie im Kernbereich eingestrahlt wird. Das vorgeschlagene Vorgehen vereinfacht den Bestrahlungsvorgang wesentlich und verringert die Zahl der bei der Bestrahlung einzustellenden Variablen. Der Bestrahlungsplan definiert nur noch, wie viele Schichten belichtet werden sollen und wie weit von der Kontur aus die nicht-belichteten Schichtbereiche in das Bauteil hineinragen sollen. Die Leistung der Laserstrahlung wird im Wesentlichen nicht mehr variiert und bleibt zumindest in einem Übergangbereich Kern-Hülle fix. Es wird angemerkt, dass im Überhangbereich des Bauteils keine abwechselnd geschmolzenen und nicht-geschmolzenen Schichten entstehen, sondern ein durchgehend aufgeschmolzenes Pulvervolumen, da die Belichtung einer Pulverschicht zu einer Schmelze führt, die über die jeweils bestrahle Pulverschicht hinaus wirkt. Gerade bei sehr dünnen Schichten und einer Leistung der Laserstrahlung, wie sie im Kernbereich üblich ist, wird das Pulver von zwei oder mehr Schichten zumindest teilweise aufgeschmolzen.

Zusammenfassend wird erfindungsgemäß in einem schichtbasierten Bestrahlungsvorgang eine Dichte von bestrahlten Schichten im Hüllenbereich gewählt, die niedriger ist als im Kernbereich. Damit liegt bei der Belichtung des z. B. Downskin-Bereichs effektiv eine höhere Schichtstärke und damit eine geringere Volumenenergie vor. Beispielsweise wird insbesondere im Downskin-Bereich nur jede n-te Schicht durchgängig mit der dem Kernbereich zugeordneten Intensität belichtet. In den dazwischenliegenden Schichten wird der Downskin-Bereich ausgespart. Die eingebrachte Volumenenergie entspricht z. B. bei durchgängiger Belichtung jeder zweiten Schicht der Hälfte und bei Belichtung jeder dritten Schicht einem Drittel der Volumenenergie im Kern. Dies kann die angesprochenen Vorteile bewirken, wie beispielsweise eine Baubarkeit auch entgegen der Auftragsrichtung des Beschichters von Überhangwinkeln bis zu 30°, eine Reduzierung des Energieeintrags im oberflächennahen Bereichen und/oder eine Vermeidung/Reduzierung einer Pulveranhäufung vor dem Bauteil.

Allgemein kann die Belichtung des Downskin-Bereichs als durchgängige Belichtung mit den Inskin-Parametern nur z. B. jeder zweiten, dritten oder n-ten Schicht komplett bis an den geplanten Konturverlauf des Bauteils in der jeweiligen Schicht durchgezogen werden. In den dazwischen liegenden Schichten wird der z. B. Downskin-Bereich nicht belichtet, sondern einfach in der Bestrahlungsplanung weggelassen.

Es wurde ferner erkannt, dass diese Vorgehensweise auch im Upskin-Bereich verwendet werden kann, um auch dort die Qualität des Hüllenbereichs, insbesondere der Oberfläche, zu verbessern.

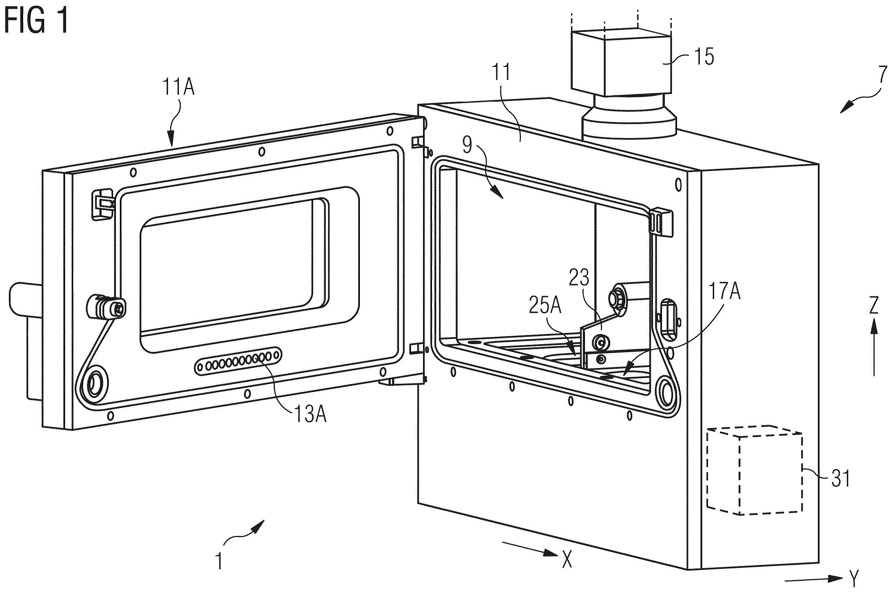

Die Figuren 1 bis 3 zeigen eine beispielhafte generative Fertigungsvorrichtung 1 zur additiven Erzeugung eines dreidimensionalen Bauteils 3 aus einem pulverförmigen Material (allgemein Pulver 5) in einer perspektivischen Ansicht sowie in schematischen Schnittansichten von oben bzw. von vorne. Zum Fertigungsvorgang wird auf die eingangs erwähnte EP 2 732 890 A2 verwiesen.

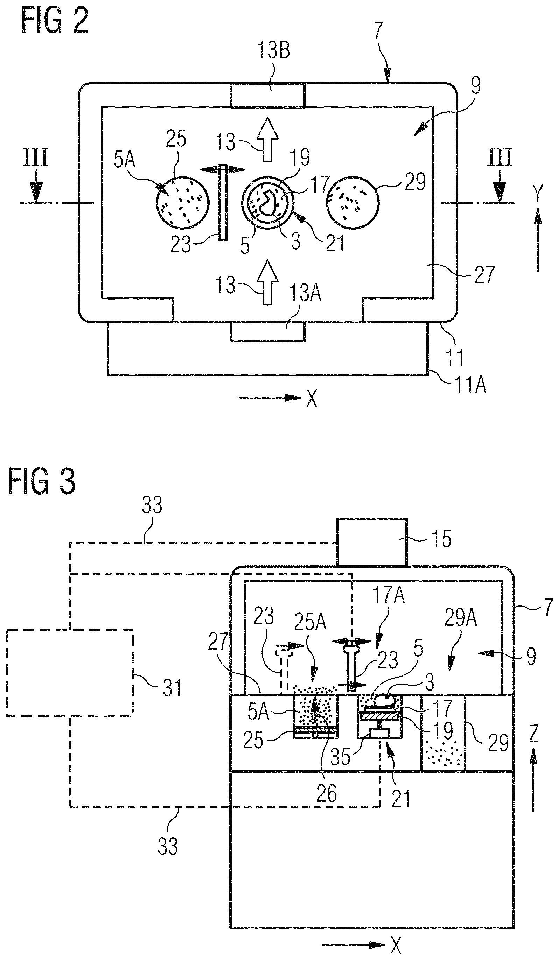

Die Fertigungsvorrichtung 1 umfasst ein Gehäuse 7, das einen Fertigungsraum 9 bereitstellt. Über eine Tür 11 Ain einer Vorderwand 11 besteht Zugang zum Fertigungsraum 9. Das Gehäuse 7 umfasst ferner ein Schutzgasabsaugsystem mit z. B. Auslassöffnungen 13A zum Fluten des Fertigungsraums 9 mit inertem Gas sowie Absaugöffnungen 13B. Ein Strömungsverlauf ist beispielhaft mit Pfeilen 13 in Fig. 2 angedeutet. Ein beispielsweise oberhalb des Gehäuses angebrachtes Bestrahlungssystem 15 ist zur Erzeugung von Laserlicht, welches das Pulver 5 zu Materialschichten eines 3D-Bauteils 3 verschmilzt, ausgebildet.

Der Fertigungsvorgang findet auf einer Arbeitsfläche 27 statt, die den Boden des Fertigungsraums 9 bildet und einen Plattformbereich 17A, einen Vorratsbereich 25A und (optional) einen Pulversammelbereich 29A aufweist. Der Fertigungsvorgang erfolgt auf einer Bauplattform 17, die im Plattformbereich 17A z. B. zentral vor der Tür 15A angeordnet ist. Die Bauplattform 17 liegt auf einem Träger 19 auf, der in einem Bauzylinder 21 in der Höhe (in Fig. 3 in ±Z-Richtung) verfahren werden kann. Der Vorratsbereich 25A dient der Bereitstellung von frischem Pulver 5A, das zur lagenweisen Herstellung des 3D-Bauteils 3 in den Bauplattformbereich 23A mit einem Beschichter 23 übertragen wird.

Während der generativen Fertigung wird auf der Bauplattform 17 wiederholt ein mit beispielsweise metallischem oder keramischem Pulver gefülltes Pulverbett zur Bestrahlung mit dem Laserlicht von oben vorbereitet. Wie in den Figuren 1 bis 3 gezeigt wird, dient der Beschichter 23 (oft auch Schieber oder Wischer genannt) zum Verteilen des Pulvers 5 in X-Richtung während des Herstellungsprozesses. Während des Beschichtens streicht ein unterer Bereich des Beschichters 23 über die Arbeitsfläche 27, nimmt Pulver mit und befüllt dadurch z. B. bzgl. der Arbeitsfläche abgesenkte Bereiche. In diesen Bereichen definiert der untere Bereich des Beschichters 23 das Niveau der Pulveroberfläche. Z. B. wird frisches Pulver 5, das in einem im Vorratsbereich 25A vorgesehenen Vorratszylinder 25 bereitgestellt wird, mit dem sich in X-Richtung bewegenden Beschichter 23 über die Arbeitsfläche 27 in den Plattformbereich 17A verschoben, wo es sich im Bereich der abgesenkten Bauplattform 17 sammelt und dieser entsprechend unter Ausbildung einer frischen Pulverschicht beschichtet wird. Nicht benötigtes Pulver wird beispielsweise in einen im Pulversammelbereich 29A vorgesehenen Sammelzylinder 29 gebracht.

Wie in den Figuren beispielhaft gezeigt wird, sind der Vorratsbereich 25A, der Plattformbereich 17A und der Pulversammelbereich 29A nebeneinander in X-Richtung versetzt angeordnet und der Beschichter 23 ist in ±X-Richtung verschiebbar.

Der Fertigungsvorgang umfasst zusammenfassend ein wiederholtes Absenken der Bauplattform 17 im Bauzylinder 21, ein Aufbauen einer frischen Pulverschicht auf der Bauplattform 17 und ein Verschmelzen der Pulverschicht in dem Bereich, in dem gemäß dem auf einer Schichtmodellstruktur basierenden Bestrahlungsplan das 3D-Bauteil 3 entstehen soll. Fig. 3 zeigt das teilweise fertiggestellte 3D-Bauteil 3, das in nicht verschmolzenem Pulver 5 eingebettet ist.

Die hierin offenbarten Fertigungsverfahren können z. B. in eine Fertigungssteuerung integriert werden. Dafür weist die Fertigungsvorrichtung 1 eine Steuerungseinheit 31 auf, in der der Bestrahlungsplan abgelegt ist und die den Vorgang nach dem Bestrahlungsplan durchführt. In den Figuren 1 und 3 ist die Steuerungseinheit 31 schematisch gestrichelt angedeutet und über strichpunktiert gezeigte Datenverbindungen 33 mit dem Bestrahlungssystem 15 und dem Antrieb 35 der Bauplattform 17 und dem Antrieb des Beschichters 23 verbunden.

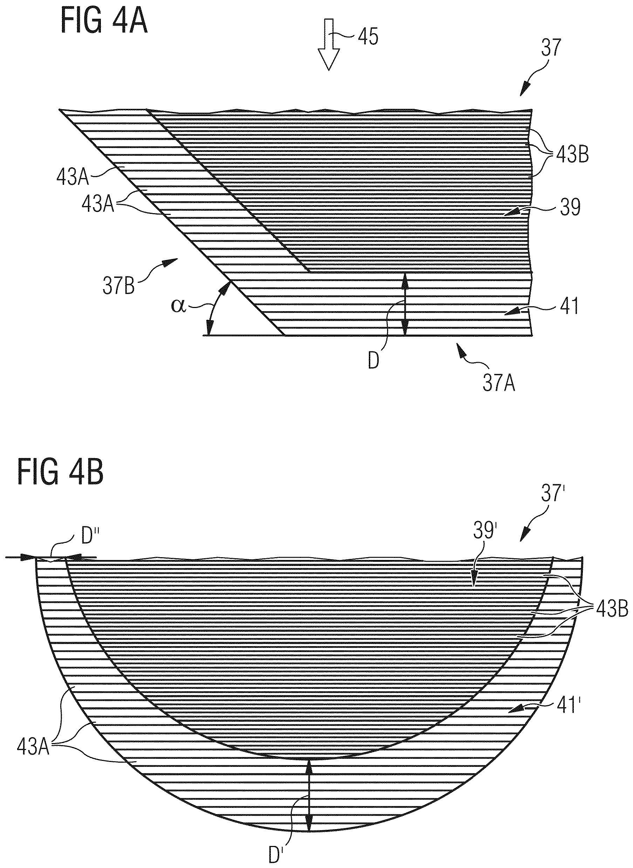

Die hierin offenbarten Konzepte erlauben es, mit der Fertigungsvorrichtung 1 3D-Bauteile schichtweise aufzubauen. Beispielhafte Schichtmodellstruktur von 3D-Bauteilen sind in den Figuren 4A und 4B schematisch dargestellt sind.

Als ein erstes Beispiel zeigt Fig. 4A einen Ausschnitt einer Schichtmodellstruktur eines Bauteils 37 mit einem Kernbereich 39 und einem Hüllenbereich 41. Der Hüllenbereich 41 ist in diesem Fall ein Downskin-Bereich, der sich zum einen auf einer Unterseite 37A des Bauteils 37 und zum anderen entlang eines Überhangs 37B erstreckt, wobei angenommen wird, dass die Laserstrahlung in Richtung des Pfeils 45 von oben senkrecht zur Ausbildung der Schichtstruktur des Bauteils 37 einfällt. Der Überhang 37B bildet eine schräge Seitenfläche aus, die sich in einem Winkel $\alpha$ bezüglich der Schichtebene (bei der Herstellung im Wesentlichen gegeben durch die Ebene der Bauplattform 17) erstreckt. Im Hüllenbereich 41 verdeutlichen die weiter beabstandeten Linien eine geringere Dichte von bestrahlten Schichten 43A im Downskin-Bereich 41A und die näher beieinanderliegenden Linien eine höhere Dichte von bestrahlten Schichten 43B im Kernbereich 39. In Fig. 4A wird die Dicke des Hüllenbereichs 41 auf der Unterseite 37A durch einen Pfeil D angedeutet.

Fig. 4B zeigt als ein weiteres Beispiel ein Bauteil 37' mit einem Kernbereich 39' und einem Hüllenbereich 41'. Im Unterschied zum Bauteil 37 der Fig. 4A ist die Unterseite 37A' durchgehend gekrümmt kugelförmig ausgebildet. Die Dicke (Pfeil D') des Hüllenbereichs 41' hängt im Beispiel der Fig. 4B von der Orientierung der Oberfläche des Bauteils 37' bezüglich der Schichtebene ab. Sie verjüngt sich umso mehr, je steiler die Oberfläche zur Schichtebene orientiert ist. Die Dicke kann bspw. bei einem Winkel von ca. 90° zur Normalen der Schichtebene auf eine geringere Dicke (Pfeil D") und evtl. bei Fortsetzung auf Winkeln von über 90°, bei denen die Oberfläche einem Upskin-Bereich entspricht, auf null zurückgehen. Die Dicke kann ferner schon bei einem Winkel von ca. 90° oder weniger auf null abnehmen. Auch in Fig. 4B ist die Dichte von bestrahlten Schichten 43A, 43B im Hüllenbereich 41' und im Kernbereich 39' durch die Nähe der Linien der Schraffuren angedeutet.

Die gezeigten Beispiele der Figuren 4A und 4B verdeutlichen den Ansatz, dass eine Parametrisierung der Bestrahlung in lateraler Richtung (d. h., in Richtung der Schichtebene) und senkrecht zur Schichtebene vorgenommen werden kann. So kann der Hüllenbereich 41, 41' wie nachfolgend erläutert durch das Ausmaß der einzelnen bestrahlten Bereiche (und somit durch das Ausmaß der nicht bestrahlten Bereiche) in der Schichtebene in Zusammenspiel mit der Anzahl der von der Schichtselektion betroffenen Schichten definiert werden. Auf diese Weise kann der Downskin-Bereich bei großen Überhangwinkeln gezielt eingestellt werden.

Wie in den Beispielen ferner gezeigt wird, erfolgt auf der Unterseite eine Bestrahlung mehrerer dicker Schichten jeweils mit der Intensität, die für die Bestrahlung von n-fach dünneren Schichten im Kernbereich entwickelt wurden, sodass insgesamt der Energieeintrag auf der Unterseite reduziert wird und dies trotz z.B. Auftragens von n-fach dünneren Schichten. Erst im Kernbereich werden die nun n-fach dünneren Schichten alle bestrahlt und die Fertigung basierend auf den Inskin-Parametern durchgeführt. Auf diese Weise kann ein Durchschmelzen durch den Hüllenbereich auf der Unterseite durch die erhöhte Anzahl der von der Schichtselektion betroffenen Schichten vermieden werden, insbesondere da auf der Unterseite 37A die Wärme durch die Bestrahlung bei der Fertigung weniger gut abfließen kann, als bspw. im Upskin-Bereich, wo sie in das bereits verfestigte Bauteil 3 abfließen kann.

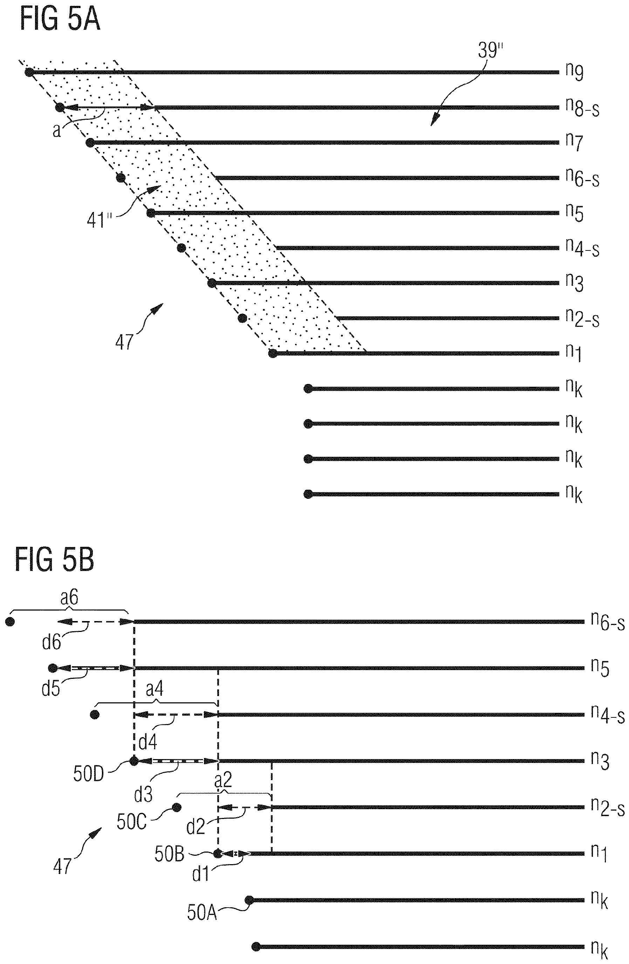

Die Figuren 5A und 5B verdeutlichen anhand von im Schnitt dargestellten Schichtmodellstrukturen wie das Ausmaß eines Hüllenbereichs durch die schichtselektive Bestrahlung festgelegt werden kann. In Fig. 5A sind schematisch vier Kernschichten nk gezeigt, auf denen eine Überhangstruktur 47 gebildet werden soll. Die Überhangstruktur 47 schließt sich an einen im Wesentlichen oberhalb der Kernschichten nk liegenden Kernbereich 39" an. Eine Schicht n1 leitet die Ausbildung eines sich unter einem Winkel zur Schichtebene erstreckenden Überhangs ein.

Allgemein wird hierin als Schichtebene eine Ebene verstanden, die im Schichtmodell üblicherweise der durch die Bewegung des Beschichters geformten Pulverbettoberfläche entspricht.

Die Überhangstruktur 47 wird durch Ausbildung eines speziell gefertigten Hüllenbereichs 41", der über selektives Bestrahlen der nachfolgenden Schichten erzeugt wird, umgesetzt. Wesentlich ist dabei, dass nicht jede Schicht im Hüllenberiech 41" bis zur Kontur des geplanten Bauteils bestrahlt wird, sondern dass zumindest eine Selektion bei der schichtbasierten Bestrahlung vorgenommen wird, so dass die Bestrahlung einiger Schichten in einem Abstand von der Kontur beendet wird. Beispielhaft ist in Fig. 5A ein Abstand a für die Schicht n8_s eingezeichnet, in dem die Bestrahlung der Pulverschicht vor der gewünschten Kontur endet. Eine gleichmäßige Steigung des Überhang angenommen, können im gezeigten Beispiel auch die Schichten n6_s, n4_s und n2_s in einem bezüglich der Kontur eingeschränkten Ausmaß bestrahlt werden. Der Abstand a kann bei mit 40 $\mu$m Schichtdicke aufgetragenen Schichten z. B. im Bereich von 300 $\mu$m liegen.

Fig. 5B zeigt die Anfangsschichten der Überhangstruktur 47 vergrößert. Die Schicht n1 (d. h., der bestrahlte Bereich der n1-Pulverschicht) erstreckt sich um einen Abstand d1 über die oberste Kernschicht nk lateral hinweg. Das Ende der Schicht n1 definiert einen Punkt der für die Übergangsstruktur 47 gewünschten Kontur 50B in der Schicht n1. Z. B. liegt d1 in diesem Übergangsbereich zur Überhangstruktur bei 150 $\mu$m weiter außen als die Kontur 50A (40 $\mu$m Schichtdicke). Allgemein wird mit der Leistung aus dem Kernbereich eingestrahlt, so dass zumindest teilweise auch Pulver unterhalb der Schicht n1 aufgeschmolzen wird. Die Bestrahlung in einem durch d1 gegebenen Gebiet formt die Oberfläche des Bauteils im Überhang.

Gemäß der schichtselektiven Bestrahlung wird nun die Bestrahlung der Schicht n2_s nicht bis zu dem für die Übergangsstruktur 47 gewünschten Konturverlauf fortgesetzt. Stattdessen endet die Bestrahlung in einem Abstand d2 vor dem Ende der Schicht n1 und in einem Abstand a2 vor dem Ende der Schicht n1 (Kontur 50C). Somit verbleibt nicht aufgeschmolzenes Pulver am seitlichen Ende der Schicht n2_s beispielsweise in einem Streifen von d2=200 $\mu$m. Man erkennt, dass die gesamte Bestrahlung der Schicht n2_s in direkter Nachbarschaft zu einer zuvor bestrahlten Schicht (hier der Schicht n1) erfolgt.

Das Ende der Schicht n3 soll nun wieder den für die Übergangsstruktur 47 gewünschten Konturverlauf (Kontur 50D) definieren. Dazu erstreckt sich die Schicht n3 um einen Abstand d3+d2 (z. B. 400 $\mu$m) über die Schicht n2_s lateral hinweg. Das Ende ragt somit um einen Abstand d3 (z. B. 200 $\mu$m) über das Ende der Schicht n1 hinaus und definiert einen weiteren Punkt, der die Schräge der Oberfläche in diesem Bereich der Überhangstruktur 47 bestimmt. Die Bestrahlung der Schicht n3 wirkt im Hüllenbereich 41" anfangs auf eine doppelt so dicke Pulverschicht (im Beispiel 80 $\mu$m) oberhalb der Schicht n1 in einem durch d2 gegebenen Gebiet. Jenseits davon gibt es keine untere zuvor bestrahlte Schicht, so dass die Bestrahlung der Schicht n3 in einem durch d3 gegebenen Gebiet nun die Oberfläche des Bauteils im Überhang bildet.

Ähnlich Schicht n2_s endet die Bestrahlung der Schicht n4_s in einem Abstand d4 (z. B. 300 $\mu$m) vor dem Ende der Schicht n3. Es verbleibt entsprechend nicht aufgeschmolzenes Pulver am seitlichen Ende der Schicht n4_s, das bei der Bestrahlung der Schicht n5 wieder zu einer doppelt so dicken Pulverschicht führt. Im durch d5 gegebenen Gebiet bildet dann die Schicht n5 die Oberfläche des Bauteils im Überhang. Die Abstände d6 und a6 definieren entsprechend die Schicht n6_s.

Das schichtselektierte Vorgehen bezieht sich somit auf die Selektion von Schichten (im Beispiel n2_s, n4_s, n6_s, n8_s), die nicht zur Oberflächenformung beitragen sollen, und von Schichten (im Beispiel n1, n3, n5, n7, n9), die bis zum Konturverlauf bestrahlt werden sollen und somit die Oberflächenform bestimmen.

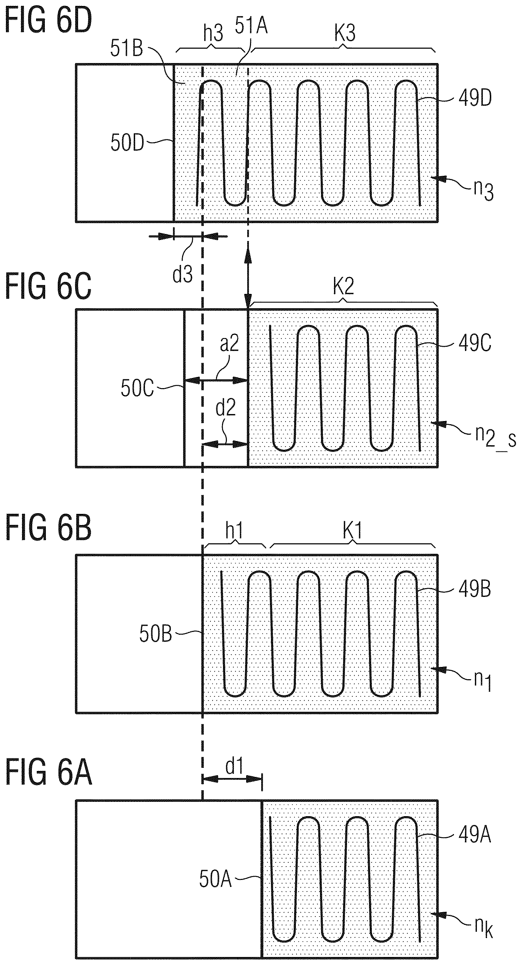

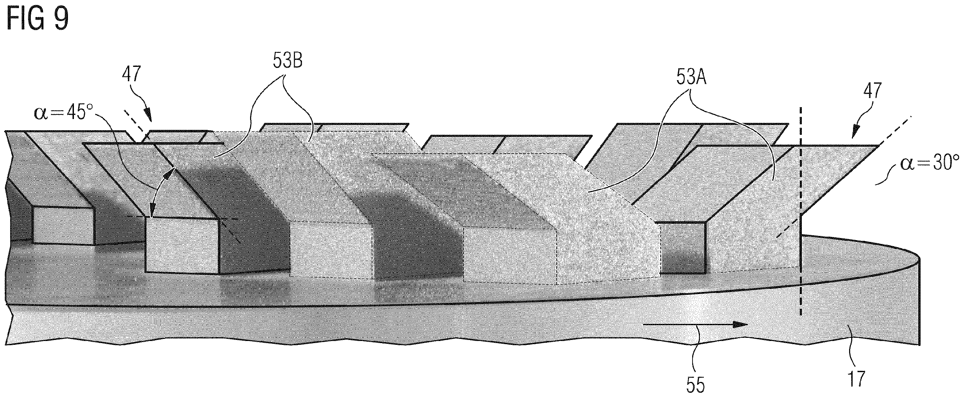

Die Figuren 6A bis 6D verdeutlichen die schichtselektive Bestrahlung in einer Aufsicht auf die Schichten nk, n1, n2_s, n3 im Übergangsbereich zwischen Hüllenbereich 41" und Kernbereich 39", wie sie beispielsweise für einen geraden Konturverlauf der Schichten im Bereich der Überhangstruktur 47 (siehe auch Fig. 9) gegeben sein können. In den Figuren sind bestrahlte Bereiche gepunktet dargestellt, wobei zusätzlich beispielhafte Scanvektoren 49A, 49B, 49C, 49D eingezeichnet wurden. Ferner erkennt man die geradlinigen Abschnitte der Konturen 50A, 50B, 50C, 50D, die der Überhangstruktur 47 zugeordnet sind und (im Schnitt) in den Figuren 5A und 5B eingezeichnet waren.

Die Geometrie der Schicht nk bildet den Ausgangspunkt. Die darüber liegende Schicht n1 erstreckt sich über den bestrahlten Bereich der Schicht nk hinweg. Zur Verdeutlichung wurde in Fig. 6B eine Art Kernbereich k1 angedeutet, der sich oberhalb des bestrahlten Bereichs der Schicht nk befindet. Neben dem Kernbereich k1 schließt sich ein weiterer bestrahlter Bereich h1 an, der den Hüllenbereich 41" mitbestimmt und in diesem Fall dem Abstand d1 zugeordnet ist.

Die Schicht n2_s erstreckt sich nur über einen Teil des bestrahlten Bereichs der Schicht n1 und stellt somit nur einen Kernbereich k2 dar, der in einem Abstand d2 vor dem Ende der Schicht n1 endet.

Die Schicht n3 erstreckt sich über den bestrahlten Bereich der Schicht n2_s hinweg, d. h., ein weiterer bestrahlter Bereich h3 schließt sich an einen Kernbereich k3 an. Ein erster Teil 51A des Bereichs h3 ist dem Abstand d2 zugeordnet und erstreckt sich oberhalb der Schicht n1. Ein zweiter Teil 51B ist dem Abstand d3 zugeordnet und weist keinen bereits bestrahlten Bereich unter sich auf. Der weitere bestrahlte Bereich h3 bestimmt den Hüllenbereich 41" mit.

Je nach Winkel des Überhangs kann in einigen Ausführungsformen ein Ausmaß der weiteren bestrahlten Bereiche und insbesondere der Teile 51A, 51B in der Auftragsrichtung gewählt werden. Je größer diese Bereiche sind, desto flacher kann die Überhangstruktur werden. Die Belichtung, d. h., der Energieeintrag, wird an das Ausmaß der weiteren bestrahlten Bereiche dadurch angepasst, dass z. B. nur noch jede (n+x)-te Schicht belichtet wird, so dass sich eine für den Hüllenbereich 41" günstige Volumenenergie einstellt.

Allgemein kann der Energieeintrag in Abhängigkeit vom Überhangwinkel angepasst werden, sodass beispielsweise mit zunehmendem Überhangwinkel ein höheres Vielfaches der Schichten im Hüllenbereich belichtet wird. Beispielsweise kann eine Belichtung von Downskin-Bereichen im Hüllenbereich von Überhängen mit Oberflächen, die sich in einem Winkelbereich von 0° bis X° erstrecken, jede 4. Schicht (oder allgemein jede n-te Schicht) belichtet werden. Bei Oberflächen, die sich in einem Winkelbereich von X° - Y° erstrecken, kann jede 2. Schicht (oder allgemein jede m-te Schicht mit m<n) belichtet werden und bei Überhängen mit Oberflächen, die sich in einem Winkelbereich von Y° - 90° erstrecken, kann jede Schicht bis zur Kontur belichtet werden. In diesem Fall ist der Downskin-Bereich im Hüllenbereich anhand mehrerer Überhangwinkel (hier z. B. $\alpha\_1=X°$ und $\alpha\_2=Y°$) in mehrere (hier z. B. drei) Zonen untergliedert. Die Zonen grenzen an den Überhangwinkeln aneinander an.

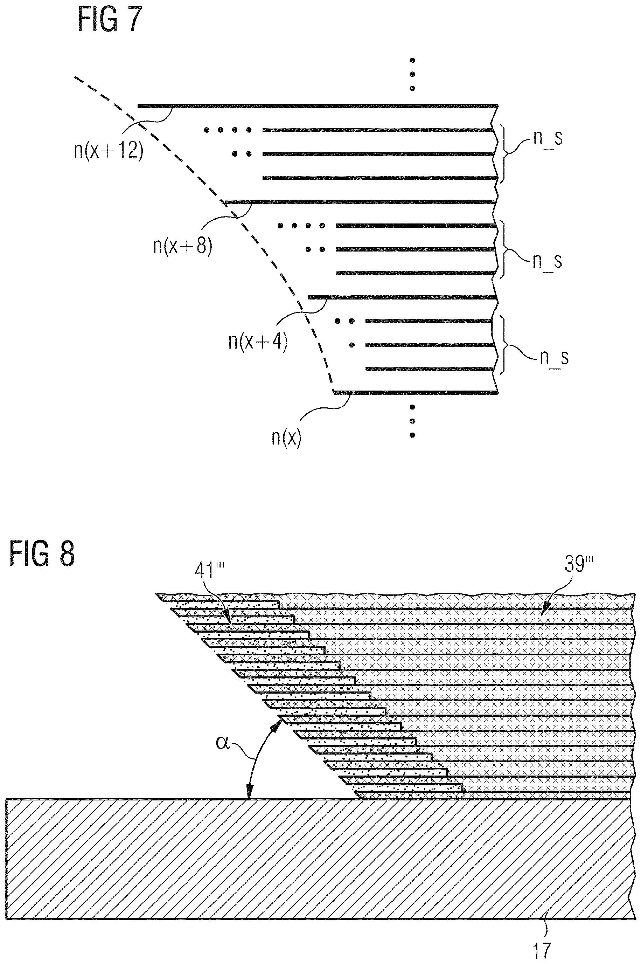

Fig. 7 zeigt schematisch weitere beispielhafte Schichtmodelle in einer Schnittdarstellung.

Hierzu zeigt Fig. 7 in einer schematischen Schnittdarstellung, dass sich nur jede vierte Schicht n(x), n(x+4), n(x+8), n(x+12), bis zum gewünschten Konturverlauf in der jeweiligen Schicht fortsetzten kann. Dies kann beispielsweise hilfreich sein, wenn sehr dünne Schichten von wenigen 10 $\mu$m mit dem Beschichter aufgetragen werden, so dass die jeweils drei dazwischen liegenden Schichten n_s zu der gewünschten Reduzierung des Energieeintrags im Hüllenbereich führen. In einer mit durchgezogenen Linien für die Schichten n_s gezeigten Ausführungsvariante enden die (verkürzt bestrahlten) Schichten n_s übereinander, so dass im überstehenden Bereich der Schichten n(x+4), n(x+8), n(x+12) immer die vierfache Schichtdicke gegeben ist.

Alternativ können die Schichten n_s mit einem Versatz dem Verlauf der Oberfläche des Überhangs folgen, wie es gepunktet für die Schichten n_s gezeigt wird. In dieser alternativen Ausführungsform kann jede der Schichten beispielsweise um 200 $\mu$m verkürzt von der Kontur bestrahlt werden, so dass sich ein gleichmäßiger Hüllenbereich ausbildet.

Fig. 8 verdeutlicht schematisch ein Bauteil 3', das mit schichtselektiver Bestrahlung auf einer Bauplattform 17 gefertigt wurde und dessen Oberfläche sich von der Bauplattform unter einem Winkel $\alpha$ nach oben erstreckt. Schematisch erkennt man hellgrau hinterlegt die Bereiche der Schichten, die bestrahlt wurden. Der gepunktete Bereich deutet den Bereich dünnerer Dichte an bestrahlten Schichten, d. h., einen Hüllenbereich 41''' mit reduziertem Energieeintrag an. Er bildet die Oberfläche des Bauteils 3' aus. Der Hüllenbereich 41''' umfasst einen Kernbereich 39''', in den der (maximale) Energieeintrag vorgenommen wurde.

Es wird angemerkt, dass im Überhangbereich des Bauteils keine abwechselnd geschmolzenen und nichtgeschmolzenen Schichten entstehen, sondern ein durchgehend aufgeschmolzenes Pulvervolumen, da die Belichtung einer Pulverschicht zu einer Schmelze führt, die über die jeweils bestrahle Pulverschicht hinaus wirkt. Gerade bei sehr dünnen Schichten und einer Leistung der Laserstrahlung, wie sie im Kernbereich üblich ist, wird das Pulver von zwei oder mehr Schichten zumindest teilweise aufgeschmolzen.

Fig. 9 ist eine Aufnahme von mehreren Bauteilen, die auf einer Bauplattform 17 mit einer Vorrichtung zur generativen Fertigung hergestellt wurden, wie sie in den Figuren 1 bis 3 gezeigt ist. Im Vordergrund erkennt man zwei Bauteile 53A, 53B, die eine saubere Oberflächenstruktur im Überhangbereich auch auf der Seite aufweisen, die einer Bewegungsrichtung 55 des Beschichters entgegen gerichtet ist. Die Überhangbereiche wurden ohne Stützstrukturen mit einem Überhangwinkel von 30° bzw. 45° erzeugt.

Ähnliche Anordnungen von in der Form identischen Prüfobjekten können den eingangs beschriebenen Testfertigungsvorgängen bei Prüfverfahren zur Bestimmung der Parameter eines generativen Fertigungsprozesses zugrunde liegen.

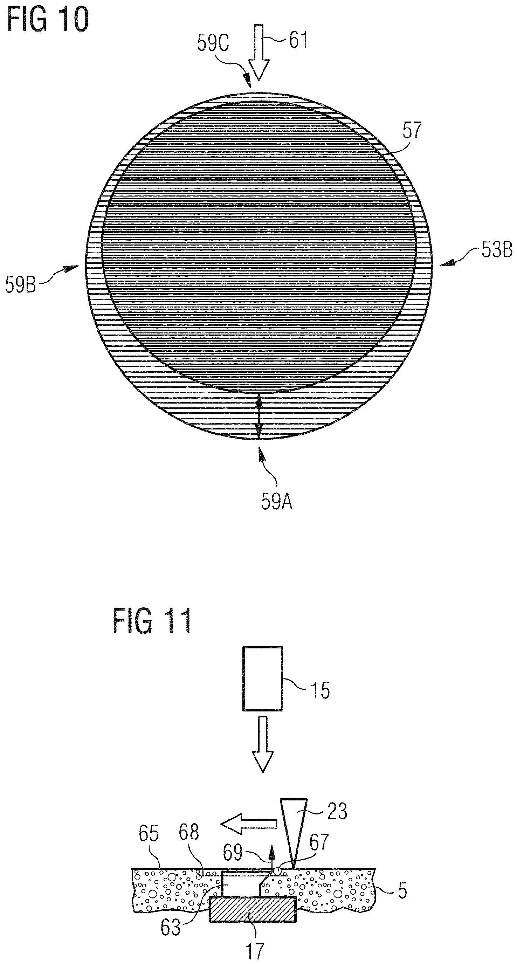

Fig. 10 verdeutlicht, dass das Konzept der selektiven Bestrahlung zur Beeinflussung der Eigenschaften des Hüllenbereichs nicht auf den Downskin-Bereich beschränkt ist, wie er beispielhaft in Zusammenhang mit den Figuren 4A und 4B beschrieben wurde. Man erkennt im Schnitt einen Kernbereich 57, der auf allen Seiten von einem Hüllenbereich umgeben ist, in dem die Dichte der bestrahlten Schichten reduziert wurde. Dabei wurde die Dicke des Hüllenbereichs im Downskin-Bereich 59A stärker gewählt als in den Sideskin- (Inskin-) Bereichen 59B und im Upskin-Bereich 59C. Die Bestrahlung der Schichten erfolgte in Richtung des Pfeils 61 gemäß einem Bestrahlungsplan, der nach den zuvor erläuterten Konzepten die Volumenenergie im Hüllenbereich anpasst. Alternativ könnte das Konzept der selektiven Belichtung auch lediglich in Downskin-Bereichen angewendet werden, die unterhalb eines kritischen Winkels liegen und daher ansonsten mit Stützstrukturen gebaut werden müssten.

Fig. 11 erläutert die eingangs beschriebene Situation, dass Pulverkorngrößen des Pulvers 5 im Bereich der mit dem Beschichter 23 erzeugten Schichtdicke (angedeutet durch eine gestrichelte Linie 68) ein Anheben (Pfeil 69) und/oder Verformen von frisch erzeugten Bereichen eines Bauteils 63 über eine Oberfläche 65 des Pulverbetts bewirken können. Insbesondere können sich besonders große Pulverkörner 67 an der Vorderseite des Bauteils 63 ansammeln und Druck auf den gerade eben erst mit dem Bestrahlungssystem 15 bestrahlten und frisch aufgebauten Bereich ausüben. Aufgrund der Verformung reduziert sich die Größe des Spalts zwischen der Unterkante des Beschichters 23 und dem oberen Ende des Bauteils.

Neben dem in Zusammenhang mit Fig. 11 angesprochenen Effekt des Anhebens von insbesondere Überhangstrukturen durch große Pulverkörner besteht ferner die Möglichkeit, dass sich die Überhangkante aufgrund von Eigenspannungen des Bauteils aus dem Pulverbett heraus verziehen kann. Auch dadurch kann sich die Größe des Spalts zwischen Beschichterunterkante und Überhangoberkante reduzieren. Da die Pulverkörner einen Durchmesser von ca. 15 μm bis 45 μm aufweisen, passen die größeren Pulverkörner nicht mehr durch den Spalt und können sich vor der Überhangkante stauen.

Wird der Überhang weiter in diese Richtung aufgebaut, kann der Effekt durch das bereits angestaute Pulver verstärkt werden und die Überhangkante zieht sich noch weiter in Richtung der Unterkante des Beschichters 23. So kann es zur Kollision zwischen der Bauteiloberkante und dem Beschichter kommen, was zum Abbruch des Bauprozesses führen kann. Die hierin offenbarten Konzepte können dieses Risiko reduzieren.

Zur Vollständigkeit wird erwähnt, dass der Ansatz einer Downskin-Belichtung, wie sie beispielsweise in Zusammenhang mit der eingangs erwähnten EP 3 127 635 A1 umgesetzt werden kann, ferner mit der hierin vorgeschlagenen selektiven Downskin-Belichtung kombiniert werden kann. Die Downskin-Belichtung mit den spezifisch bestimmten Energiewerten würde in diesem Fall weiter in das Innere des Bauteils fortgesetzt und so nach Anwendung der selektiven Downskin-Belichtung umgesetzt.

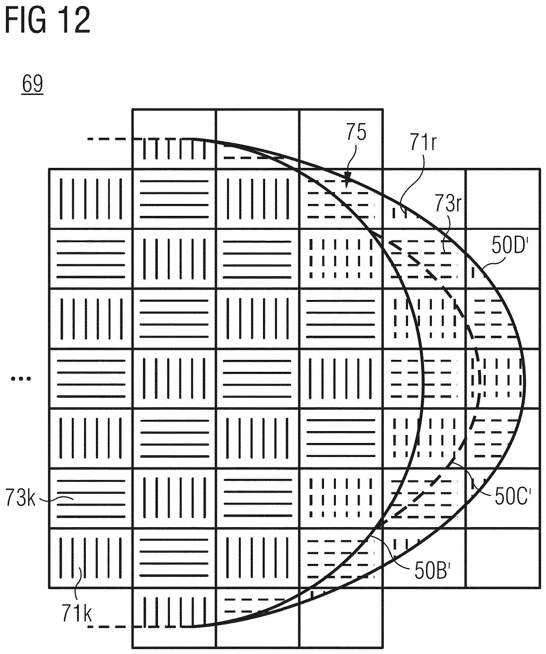

Eine beispielhafte Implementierung der Verwendung von variierten Laserparametern bei der Bestrahlung konturnaher Bereiche wird in Zusammenhang mit Fig. 12 erläutert. Man erkennt ein Bestrahlungspattern 69, wie es z. B. für die Schicht n3 der Fig. 5B im Bestrahlungsplan vorgesehen werden könnte.

Das Bestrahlungspattern 69 basiert auf schachfeldartig angeordneten (rechteckigen) Bestrahlungsfeldern, wobei jedem Feld ein spezifischer Belichtungspfad, umfassend mehrere Scanvektoren, zugeordnet ist. Auf der Innenseite (links in Fig. 12) erkennt man eine Anordnung von zwei Arten von (Kern-) Belichtungspfaden 71k, 73k, wobei die durchgezogenen Linien ein Einstrahlen mit Inskin-Parametern andeuten. Die Belichtungspfade 71k, 73k sind beispielhaft um 90° zueinander gedreht und bewirken ein Aufschmelzen des Pulvers im für den Kern vorgesehenen Umfang. Allgemein ist es üblich, eine derartige Untergliederung einer Schicht in Bestrahlungsfelder vorzunehmen, wobei für die Bestrahlungsfelder unterschiedliche Bestrahlungsparameter insbesondere zur Homogenisierung des Volumenenergieeintrags im Bestrahlungsplan festgelegt werden können.

Auf der Seite der Konturlinie 50D' erkennt man Belichtungspfade 71r, 73r, die in konturnahen Feldern mit gestrichelten Linien zur Verdeutlichung einer reduzierten (variierten) Laserleistung dargestellt sind. Schneidet die Konturlinie 50D' ein Feld, wird nur der innen liegende Bereich des Feldes mit einem entsprechend verkürzten Scanvektor bestrahlt, um den geplanten Oberflächenverlauf des Bauteils auszubilden. Es wird angemerkt, dass kurze Scanvektoren in einem Feld aufgrund der teilweisen Bestrahlung eines Feldes die Fertigung verlangsamen, da dies viele Beschleunigungs- und Abbremsvorgänge für eine kleine belichtete Fläche erfordert.

Die Kombination des Ansatzes der selektiven Bestrahlung mit der Energiereduzierung führt nun dazu, dass z. B. größere Streifen entlang der Konturlinie 50D' vorliegen, die mit der (nur einmal einzustellenden) Laserintensität bestrahlt werden.

Zur Verdeutlichung des Hintergrundes sind in Fig. 12 zusätzlich eine Konturlinie 50C' und eine Konturlinie 50B' der vorausgehenden (verkürzt bestrahlten Schicht (in Fig. 5B die Schicht n2) und der letzten bis zur Kontur bestrahlten Schicht (in Fig. 5B die Schicht n1) eingezeichnet. Man kann erkennen, dass, wenn jede Schicht (n1, n2, n3) bis zur jeweiligen Kontur bestrahlt wird und nur im Überhangbereich die Intensität (z. B. gemäß EP 3 127 635 A1) reduziert wird, sich zwei schmale Streifen in den Schichten n2 und n3 ergeben. Die Streifen würden zwischen der Konturlinie 50B' und der Konturlinie 50C' und zwischen der Konturlinie 50C' und der Konturlinie 50D' verlaufen und mit entsprechend vielen kurzen Scanvektoren bestrahlt werden (nicht in Fig. 12 eingezeichnet).

Bei der selektiven Bestrahlung kann nun die Schicht n2 bis zur Konturlinie 50C' mit voller Intensität bestrahlt werden (nicht in Fig. 12 eingezeichnet). Dafür erstreckt sich die Bestrahlung der in Fig. 12 dargestellten Schicht n3 mit reduzierter Intensität in einem größeren Bereich zwischen der Konturlinie 50B' und der Konturlinie 50D' und kann so unter anderem mit entsprechend größeren Scanvektoren bestrahlt werden, was die Fertigung beschleunigt.

Ferner kann bei der Kombination des Ansatzes der selektiven Bestrahlung mit der Energiereduzierung der Bestrahlungsplan derart entworfen werden, dass der Übergang von den Inskin-Parametern auf die variierten Laserparameter nicht mehr exakt dem Verlauf der Konturlinie 50B' folgt, sondern die Schachfeldstruktur möglichst weitgehend bestehen bleibt. In der beispielhaften Umsetzung gemäß Fig. 12 werden all die Felder, durch die die Konturlinie 50B' verläuft, als Ganzes mit der reduzierten Laserleistung bestrahlt. Entsprechend fällt nur im Bereich der Konturlinie 50D' eine Unterteilung der Felder in bestrahlte und nicht-bestrahlte Bereich an. In anderen Worten, die Schachfelder, die den Downskin-Bereich berühren bzw. bei denen die vorausgehende Schicht zumindest teilweise nicht bestrahlt wurde, werden mit reduzierter Leistung belichtet. Der Bestrahlungsvorgang kann so weiter beschleunigt werden.

Dies Vorgehen kann insbesondere dann vorteilhaft umgesetzt werden, wenn der Übergang aufgrund der selektiv nicht-bestrahlten Schichten weiter im Bauteilinneren liegt. Jedoch kann allgemein bei Bestrahlungsplänen, die im Überhangbereich die Intensität (z. B. gemäß EP 3 127 635 A1) reduzieren, der innere Wechsel auf Basis der Bestrahlungsfelder vorgenommen werden.

Fig. 13 zeigt schematisch ein schichtweise aufzubauendes Bauteil mit einem Abschnitt in der Form eines gekippten Zylinders 80. Zur Verdeutlichung wurden verschiedene Zonen auf der Zylindermantelfläche angedeutet: eine Upskin-Zone U, eine Inskin-Zone I und eine Downskin-Zone D, die durch Übergangslinien t_UI, t_ID schematisch in Fig. 13 getrennt werden. Die Zonen können in einem Hüllenbereich 81A mit eigenen schichtspezifischen Bestrahlungsstrategien aufgebaut werden, die sich voneinander und eventuell auch von der Bestrahlungsstrategie eines Kernbereichs 81B unterscheiden. Man erkennt, dass für den gekippten Zylinder 80 jede Schicht eine Vielzahl von Ausrichtungswinkeln der Oberfläche aufweist. Beispielsweise umfasst die Downskin-Zone D einen Bereich von Überhangwinkeln, die bis zur am Umkehrpunkt verlaufenden Linie L hin von beiden Seiten aus zunehmen.

Die verschiedenen Zonen sind durch Winkelbereiche gegeben, unter denen die entsprechenden Oberflächen verlaufen. Beispielsweise bezieht sich die Upskin-Zone U auf nach oben gerichtete Oberflächen bis zu einem Übergangswinkel $\beta\_1$, der z. B. im Bereich von 93° liegt. Die Inskin-Zone I bezieht sich auf zur Seite gerichtete Oberflächen in einem Winkelbereich zwischen dem Übergangswinkel $\beta\_1$ und einem, einen leichten Überhang charakterisierenden, Übergangswinkel $\beta\_2$ (z. B. im Bereich von 93° bis 87°). Die Downskin-Zone D bezieht sich auf nach unten gerichtete Oberflächen, in diesem Fall ab dem Übergangswinkel $\beta\_2$, wobei eine maximale z. B. ohne Stützstrukturen umsetzbare Oberflächenschräge durch den fertigungsprozessspezifischen kritischen Winkel (beispielsweise bei 30° angestrebt) gegeben ist.

Die Downskin-Zone D kann z. B. im Winkelbereich von 87° bis 0° ausgebildet werden, wobei sie in weitere Zonen untergliedert werden kann, z. B. in einen Winkelbereich von 87° bis 45°, einen Winkelbereich von 45° bis 30° und eventuell in einen Winkelbereich von 30° bis 0°, falls auch Oberflächen jenseits des kritischen Winkels z. B. mit Hilfe von Stützstrukturen umzusetzen sind.

Wie bereits angesprochen kann sich bei der strikten Umsetzung eines definierten Übergangswinkels eine sichtbare, entlang der Übergangslinie t_UI, t_ID verlaufende sprunghafte Änderung des Erscheinungsbildes der unterschiedlichen Bestrahlungsstrategien ausbilden.

Wie hierin nun ferner vorgeschlagen wird, kann eine Übergangslinie t_UI, t_ID zwischen definierten Zonen U, I, D in einen etwas breiteren Übergangsbereich 83, der in Fig. 13 schematisch um die Übergangslinie t_ID angedeutet ist, ausgeweitet werden. Eine derartige Aufweitung führt zu einer Glättung des Erscheinungsbildes und der Struktur im Bereich der Übergangslinie t_UI, t_ID. So kann ein stufenloser Übergang zwischen benachbarten Zonen entstehen. Dies kann beispielsweise mit einem zufälligen Wechsel der den beiden benachbarten Zonen zugeordneten Bestrahlungsstrategien innerhalb des Übergangsbereichs 83 erfolgen.

Fig. 14 zeigt ein generativ gefertigtes Testobjekt 85 mit mehreren Abschnitten 85A, 85B, in denen Überhangstrukturen ausgebildet werden (als schematische Strichzeichnung und Foto). Bei der Fertigung wurden zwei Bestrahlungsstrategien eingesetzt, da die Struktur in Upskin-Bereiche und einen Downskin-Bereich unterteilt wurde. Man erkennt im Abschnitt 85A eine Glanzlinie t_UD, die den Wechsel zwischen den Bestrahlungsstrategien andeutet.

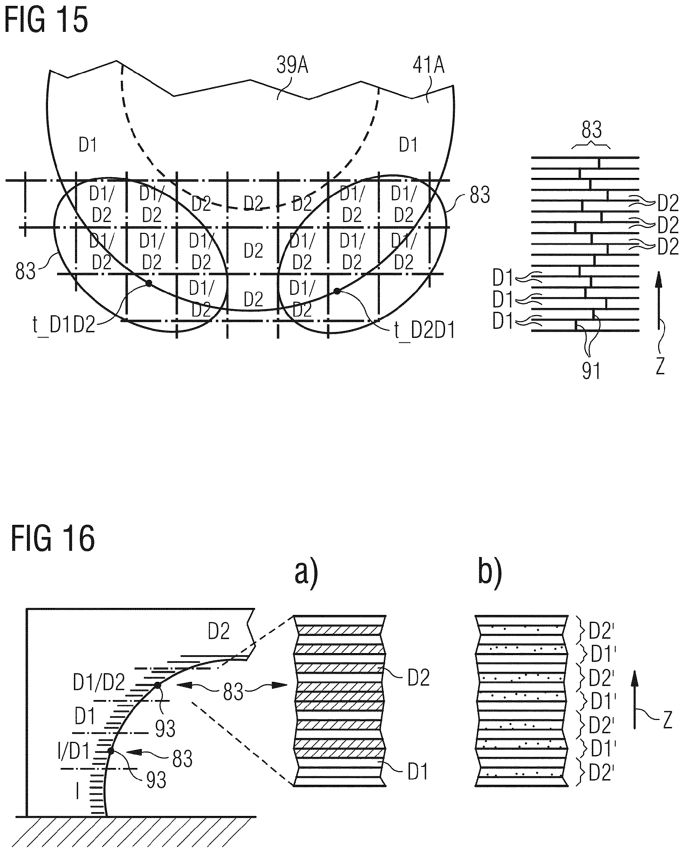

Schematisch wird in Fig. 14 verdeutlicht, wie im Bereich der Glanzlinie ein Übergangsbereich 83 vorgesehen werden kann, der bei der Zuordnung der Bestrahlungsstrategien in den einzelnen Schichten berücksichtigt werden kann, wie in Zusammenhang mit Fig. 15 erläutert wird. Zur Verdeutlichung ist in Fig. 14 ferner ein Übergangsbereich 83v angedeutet, in dem sich Bestrahlungsstrategien von Schicht zu Schicht, d. h., in vertikaler Richtung, abwechseln können, wie in Zusammenhang mit Fig. 16 erläutert wird. In beiden Fällen kann die Verwendung von Übergangsbereichen zu geglätteten Zonenübergängen an der Oberfläche eines Testobjekts führen.

Eine Glättung erfolgt somit beispielhaft in einem Übergangsbereich, in dem der Zonenübergang in den einzelnen Schichten variiert. Der Übergang zwischen einzelnen Zonen kann somit räumlich auf einen Bereich verteilt werden. Ein Zonenübergang in einem Übergangsbereich ist entsprechend nicht starr anhand eines Grenzwinkels definiert, sondern erfolgt sukzessive, beispielsweise in einem näher zu definierenden Winkelbereich. Dadurch können benachbarte Zonen sowohl in der Schichtebene (hier der X-Y-Ebene) als auch in vertikaler Richtung, d. h., in der Schichtaufbaurichtung (hier der Z-Richtung), verschmelzen.

Eine Umsetzung eines Zonenübergangs bei der Ansteuerung eines Bauprozesses von Bauteilen kann durch verschiedene Ansätze erfolgen.

In einem ersten Ansatz erfolgt eine Definition verschiedener Zonen (Upskin-, Downskin-, Inskin-Zone) nicht streng ab einem bestimmten Winkel, sondern innerhalb eines definierten Winkelbereichs. Ein konkret in einer Schicht einzusetzender Zonenübergangswinkel wird schichtweise auf einen Wert innerhalb der angegebenen Winkelgrenzen festgelegt. Dies kann zufällig oder nach einem bestimmten Muster erfolgen. In letzterem Fall kann die Festlegung z. B. zu alternierenden Bestrahlungsstrategien in übereinander gelegenen Bereichen aufeinanderfolgender Schichten (allgemein einem mehrfachen Hin- und Zurückwechseln zwischen den Bestrahlungsstrategien in einer Abfolge von benachbarten Schichten entlang der Schichtaufbaurichtung) führen oder Bestrahlungsstrategien reichen unterschiedlich weit in einen die Oberfläche des dreidimensionalen Bauteils 3 formenden Übergangsbereich hinein.

In einem weiteren Ansatz erfolgt eine Definition verschiedener Zonen (Upskin-, Downskin-, Inskin-Zonen) wie bisher streng ab einem bestimmten Winkel. Jedoch wird in jeder Schicht eine der angrenzenden Zonen ausgehend vom theoretischen Zonenübergang etwas vergrößert oder verkleinert, beispielsweise um ein oder mehrere Bestrahlungsfelder erweitert oder reduziert. Dies kann wiederum innerhalb von zuvor gesetzten Grenzen zufällig oder nach einer Systematik erfolgen.

In Fig. 15 ist eine Schicht 91 mit einem Abschnitt 41A, der einem Hüllenbereich zugeordnet ist, und einem Abschnitt 39A, der einem Kernbereich zugeordnet ist, schematisch dargestellt. Im Hüllenbereich sind zwei Bestrahlungsstrategien D1 und D2 in Abhängigkeit des Überhangwinkels vorgesehen. Zwischen den Bestrahlungsstrategien D1 und D2 erstrecken sich Übergangsbereiche 83, in denen je nach Zuordnung eine der Bestrahlungsstrategien D1 und D2 in schematisch angedeuteten Bestrahlungsfeldern D1/D2 eingesetzt wird.

Zur Vollständigkeit werden Übergangslinien t_D1D2, t_D2D1 angedeutet, bei denen ohne Umsetzung der hierin vorgeschlagenen Konzepte die Übergänge zwischen D1 und D2 bzw. D2 und D1 verlaufen würden.

Gemäß den hierin vorgeschlagenen Ansätzen kann nun in einer Schicht der Wechsel zwischen den Bestrahlungsstrategien D1 und D2 im Übergangsbereich 83 gewählt werden, wobei jeder Wechsel innerhalb einer Schicht derart vorgenommen wird, dass eine räumliche Position des Wechsels in einer Abfolge von benachbarten Schichten bidirektional variiert. Dies wird in einer schematischen Aufsicht auf mehrere Schichten im Bereich der Übergangslinie t_D1D2 in der rechten Figurenhälfte verdeutlicht. Jeder Wechsel ist als Strich 91 in den einzelnen Schichten eingezeichnet. Auf der linken Seite eines jeden Strichs 91 erfolgt die generative Fertigung mit der Bestrahlungsstrategie D1 und auf der rechten Seite eines jeden Strichs 91 mit der Bestrahlungsstrategie D2. Man erkennt, dass die Positionen der Striche (d. h., der Wechsel) in beide Richtungen variieren und diese entsprechend zueinander verschoben angeordnet sind. Dadurch ergibt sich ein mehrfaches Hin- und Zurückwechseln zwischen den Bestrahlungsstrategien in einer Abfolge von benachbarten Schichten entlang der Schichtaufbaurichtung (Z-Richtung in Fig. 15).

Mit anderen Worten wird die räumliche Position des Wechsels und/oder das Hin- und Zurückwechseln durch Zuordnung von Übergangsparametern, insbesondere von Zonenübergangswinkeln, in einem Winkelbereich um einen vorbestimmten Übergangswinkel (der den angedeuteten Übergangslinien t_D1D2, t_D2D1 entspricht) bewirkt. Allgemein kann die Zuordnung insbesondere durch einen Zufallsalgorithmus oder nach einem vorgegebenen Muster erfolgen. Des Weiteren kann die räumliche Position des Wechsels und/oder das Hin- und Zurückwechseln durch eine Zuordnung eines vorbestimmten Übergangswinkels und ein Vergrößern oder Verkleinern sich aus dem Übergangswinkel ergebender Zonen bewirkt werden. Das Vergrößern oder Verkleinern der sich aus dem Übergangswinkel ergebenden Zonen kann beispielsweise durch einen Zufallsalgorithmus oder nach einem vorgegebenen Muster im Übergangsbereich erfolgen.

Fig. 16 zeigt eine Seitenansicht eines Bauteils mit einer gekrümmten Seitenfläche, wobei die Seitenfläche ausgehend von einem Inskin-Bereich Downskin-Bereiche mit abnehmenden Überhangwinkeln ausbildet. Der Inskin-Bereich wird mit einer Bestrahlungsstrategie I und die Downskin-Bereiche werden mit zwei Bestrahlungsstrategien D1 und D2 im Hüllenbereich erzeugt. Fig. 16 zeigt entsprechend zwei Übergangsbereiche 83, die im Bereich von vorbestimmten Übergangsparametern (vorbestimmten Überhangwinkeln, die zwischen den Bestrahlungsstrategien differenzieren) definiert werden. Beispielhafte vorbestimmte Überhangwinkel sind in Fig. 16 mit Punkten 93 angedeutet, wobei sich entlang der zugehörigen Schicht eine Glanzlinie ausbilden würde, wenn die hierin vorgeschlagenen Konzepte zur Glättung des Übergangs nicht umgesetzt werden.

Beispielhaft sind zwei Ansätze a) und b) zur Glättung des Übergangs im oberen Übergangsbereich 83 auf der rechten Seite der Fig. 16 - unter a) und b) - skizziert. Gemäß dem Ansatz a) werden aufeinanderfolgende Schichten im oberen Übergangsbereich 83 zufällig mit entweder der Bestrahlungsstrategie D1 oder der Bestrahlungsstrategie D2 erzeugt. Ansatz b) bezieht sich auf die zuvor diskutierte Reduzierung der bestrahlten Schichten in Abhängigkeit von Überhangwinkelbereichen. Beispielsweise wird zwischen den Übergangsbereichen 83 nur jede zweite Schicht bestrahlt (Bestrahlungsstrategie D1') und bei den noch flacheren Überhangwinkeln wird nur jede dritte Schicht bestrahlt (Bestrahlungsstrategie D2'). Im oberen Übergangsbereich 83 werden die Bestrahlungsstrategien D1' oder D2' beispielsweise nach einem vorgegebenen Muster (hier alternierend) eingesetzt.

Es wird angemerkt, dass Ansatz b) entsprechend angepasst ebenfalls bei einem Wechsel in einer Schicht bzw. einer Gruppe von Schichten umgesetzt werden kann (siehe Beschreibung zur Fig. 15), wobei jeder Wechsel beispielsweise innerhalb einer Gruppe von Schichten derart vorgenommen wird, dass eine räumliche Position des Wechsels in einer Abfolge von benachbarten Gruppen von Schichten bidirektional variiert.

Alternative Vorgehensweisen hinsichtlich des Einsatzes von verschiedenen Bestrahlungsstrategien in einem Übergangsbereich beinhalten beispielsweise eine Bevorzugung einer Bestrahlungsstrategie nahe der Zone, in der die jeweilige Bestrahlungsstrategie primär umgesetzt wird.

Neben einer Verbesserung der Bauteiloptik können sich aus dem Einsatz von Übergangsbereichen weitere Vorteile ergeben wie der einer verbesserten Oberflächenqualität der Bauteile, da die Rauheit an Zonenübergängen reduziert werden kann, oder verbesserte mechanische Eigenschaften, da der Verschmelzungsvorgang z. B. in geringem Maße positiv beeinflusst werden kann.

Ferner wird man erkennen, dass die hierin offenbarten Aspekte auch in Kombination mit dem sogenannten "Adaptive Slicing" eingesetzt werden können. Beim Adaptive Slicing werden Bauteilflächen, die in einem nur kleinen Winkel zur Pulverschichtebenen stehen, mittels dünneren Schichten gefertigt als Bauteilflächen, die (nahezu) senkrecht zu den Pulverschichtebenen stehen. So kann z. B. eine weniger raue Oberfläche erhalten werden und die Fertigungsdauer kann bei insgesamt guter Oberflächenqualität verkürzt werden.

Es wird anerkannt werden, dass die hierin offenbarten Konzepte im gesamten Hüllenbereich oder nur in einem Abschnitt des Hüllenbereichs umgesetzt werden können. Beispielsweise können die hierin offenbarten Konzepte in einem Überhangbereich umgesetzt werden, der entgegen der Beschichtungsrichtung ausgerichtet ist, aber nicht in einem Abschnitt des Hüllenbereichs, der in Beschichtungsrichtung ausgerichtet ist.

Mit Blick auf die hierin offenbarten Konzepte, können auch in den Kern- und Hüllenbereichen die Pulverschichtdicken über das Bauteil und damit auch der für den Kernbereich benötigte Energieeintrag hinweg variieren. Jedoch ist bei Umsetzung der hierin offenbarten Konzepte zumindest in einem Unterbereich des Schichtaufbaus die Dichte der bestrahlten Pulverschichten im Hüllenbereich niedriger als die Dichte des angrenzenden Kernbereichs (falls ein solcher vorhanden ist). Schichten des Hüllenbereichs ohne in Schichtrichtung angrenzenden Kernbereich haben dann eine Dichte, die niedriger ist als ein Kernbereich, der daran angrenzen würde.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zur generativen Fertigung eines dreidimensionalen Bauteils (3) aus einem Pulver (5), mit den Schritten:
   Unterteilen eines Schichtstrukturmodells des zu fertigenden Bauteils (3) in einen Kernbereich (39) und einen an den Kernbereich (39) angrenzenden Hüllenbereich (41), wobei der Hüllenbereich (41) zumindest einen Abschnitt der Oberfläche des dreidimensionalen Bauteils (3) ausbildet, und
   Durchführen eines schichtbasierten Bestrahlungsvorgangs auf Grundlage des Schichtstrukturmodells, bei dem eine Dichte von bestrahlten Pulverschichten im Hüllenbereich (41) niedriger ist als im in Schichtebenenrichtung angrenzenden Kernbereich (39), wobei die Dichte durch die Anzahl von bestrahlten Pulverschichten in Richtung der Normalen der Pulverschichten pro Längeneinheit gegeben ist, wobei das Bauteil (3) eine Überhangstruktur (47) aufweist und durch selektives Laserschmelzen auf einer Bauplattform (17) gefertigt wird, ferner mit den Schritten:

   Bereitstellen eines Bestrahlungsplans basierend auf einem Schichtstrukturmodell des dreidimensionalen Bauteils (3), wobei das Schichtstrukturmodell eine Sequenz von Schichten (nk, n1, ...n9) umfasst, denen jeweils eine schichtspezifische Kontur (50A, 50B, 50C, 50D) des Bauteils (3) zugeordnet ist, wobei die Sequenz eine erste Untergruppe von Schichten (n1, n3, n5) und eine zweite Untergruppe von Schichten (n2_s, n4_s, n6_s) umfasst, die ineinander verschachtelt sind, und wobei bei der ersten Untergruppe von Schichten (n1, n3, n5) im Bereich der Überhangstruktur (47) eine Bestrahlung des Pulvers (5) bis zur Kontur (50A, 50B, 50D) geplant ist, und bei der zweiten Untergruppe von Schichten im Bereich der Überhangstruktur eine Bestrahlung des Pulvers (5) nur bis zu einem Abstand (a2, a4, a6) von der Kontur (50C) geplant ist, und
   Durchführen eines sequentiellen Auftragens von Pulverschichten auf der Bauplattform (17) und Bestrahlung der Pulverschichten mit Bestrahlungsparametern des Laserstrahls gemäß dem Bestrahlungsplan.

2. Verfahren nach Anspruch 1, wobei zum Auftragen der Pulverschichten Pulver (5) mit einem Beschichter (23) aus einem Vorratsbereich (25A) in einer Auftragsrichtung aufgetragen wird und die Überhangstruktur derart gegen die Auftragsrichtung ausgerichtet ist, dass die Kontur mindestens einer nachfolgend zu bestrahlenden Schicht im Bereich der Überhangstruktur (47) näher als die Kontur einer zuvor bestrahlten Pulverschicht an den Vorratsbereich (25A) heranragt, und/oder
wobei die Bestrahlungsparameter des Laserstrahls entsprechend der gewünschten Wechselwirkung des Laserstrahls mit dem Pulver (5) in einem Kernbereich des Bauteils (3) fest eingestellt sind.

3. Verfahren nach Anspruch 1 oder 2, wobei im Schichtstrukturmodell eine Schicht (n3) in, insbesondere rechteckige, Bestrahlungsfelder (71k, 73k, 71r, 73r) unterteilt wird, und wobei im Bestrahlungsvorgang in Bestrahlungsfelder (71r, 73r) im Hüllenbereich (41), insbesondere im konturnahen Bereich der Schicht (n3), ein Energieeintrag vorgenommen wird, der gegenüber dem Energieeintrag im Kernbereich (39), insbesondere in konturfernen Bestrahlungsfeldern (71k, 73k), reduzierter ist.

4. Verfahren nach Anspruch 3, wobei die Bestrahlungsfelder (73r) einer Schicht (n3), die von der Kontur (50D') der Schicht (n3) geschnitten werden, nur im, das Bauteil (3) bildenden, Innenbereich bestrahlt werden, und/oder

wobei der Beginn der Bestrahlung mit einem reduzierten Energieeintrag im Bereich derjenigen Bestrahlungsfelder beginnt, die von einer, insbesondere in Schichtrichtung, auf die Schicht (n3) projizierten Kontur (50B') einer Schicht (n1) geschnitten werden, wobei diese Schicht (n1) im Hüllenbereich (41) bis zur Kontur (50B') bestrahlt wurde, und/oder
wobei die Bestrahlungsfelder, die von einer auf die Schicht (n3), insbesondere in Schichtrichtung, projizierten Kontur (54B', 54C') geschnitten werden, als Ganzes mit dem reduzierten Energieeintrag oder als Ganzes mit dem Energieeintrag des Kernbereichs (39) bestrahlt werden.

5. Fertigungsvorrichtung (1) zur generativen Fertigung eines dreidimensionalen Bauteils (3) aus einem Pulver (5) mit

einem eine Arbeitsfläche (27) bereitstellenden Fertigungsraum (9), der einen Plattformbereich (17A) umfasst, einem Bauzylinder (21), der einen in der Höhe verfahrbaren Träger (19) aufweist, auf dem das dreidimensionale Bauteil (3) auf einer Oberfläche einer Bauplattform (17) schichtweise hergestellt werden soll,
einer Schiebevorrichtung mit einem Beschichter (23) zum Erzeugen von Pulverschichten mit dem Pulver (5) im Plattformbereich (17A),
einem Bestrahlungssystem (15) zur Erzeugung eines Strahls für die Bestrahlung der Pulverschichten im Plattformbereich (17A) zum schichtweisen Herstellen des dreidimensionalen Bauteils (3) und
einer Steuerungseinheit (31), die basierend auf Bestrahlungsdaten eines Bestrahlungsplans des dreidimensionalen Bauteils (3) die Fertigung des dreidimensionalen Bauteils (3) nach einem Verfahren gemäß einem der Ansprüche 1 bis 4 steuert, wobei insbesondere die Bestrahlungsdaten zu bestrahlende Bereiche (k1, k2, h1, h2) der Pulverschichten definieren, die zu bestrahlenden Bereiche (k1, k2, h1, h2) einen Hüllenbereich (41) und einen Kernbereich (39) umfassen und eine Dichte von bestrahlten Pulverschichten im Hüllenbereich (41) niedriger ist als im Kernbereich (39).

## Claims

1. A method for the additive manufacturing of a three-dimensional component (3) from a powder (5), comprising the following steps:
dividing a layer structure model of the component (3) to be manufactured into a core region (39) and a casing region (41) adjoining the core region (39), wherein the casing region (41) forms at least one section of the surface of the three-dimensional component (3), and
performing a layer-based irradiation process based on the layer structure model, in which a density of irradiated powder layers in the casing region (41) is lower than in the core region (39) adjoining in the layer plane direction, wherein the density is given by the number of irradiated powder layers in the direction of the normal of the powder layers per unit length, wherein the component (3) has an overhang structure (47) and is manufactured by selective laser melting on a construction platform (17), further comprising the following steps:

providing an irradiation plan based on a layer structure model of the three-dimensional component (3), wherein the layer structure model comprises a sequence of layers (nk, n1,...n9), each of which is associated with a layer-specific contour (50A, 50B, 50C, 50D) of the component (3), wherein the sequence comprises a first subgroup of layers (n1, n3, n5) and a second subgroup of layers (n2_s, n4_s, n6_s) which are nested within each other, and wherein in the first subgroup of layers (n1, n3, n5) in the region of the overhang structure (47) an irradiation of the powder (5) up to the contour (50A, 50B, 50D) is planned, and in the second subgroup of layers in the region of the overhang structure an irradiation of the powder (5) only is planned to a distance (a2, a4, a6) from the contour (50C), and

performing a sequential application of powder layers on the construction platform (17) and irradiating the powder layers with irradiation parameters of the laser beam according to the irradiation plan.

2. The method according to claim 1, wherein, to apply the powder layers, powder (5) is applied with a coater (23) from a storage region (25A) in an application direction and the overhang structure is oriented counter to the application direction in such a way that the contour of at least one layer to be subsequently irradiated in the region of the overhang structure (47) protrudes closer to the storage region (25A) than the contour of a previously irradiated powder layer, and/or

wherein the irradiation parameters of the laser beam are permanently set according to the desired interaction of the laser beam with the powder (5) in a core region of the component (3).

3. The method according to claim 1 or 2, wherein in the layer structure model a layer (n3) is divided into, in particular rectangular, irradiation fields (71k, 73k, 71r, 73r), and wherein in the irradiation process into irradiation fields (71r, 73r) in the casing region (41), in particular in the region of the layer (n3) close to the contour, an energy input is carried out which is reduced relative to the energy input in the core region (39), in particular in the irradiation fields (71k, 73k) remote from the contour.

4. The method according to claim 3, wherein the irradiation fields (73r) of a layer (n3) which are intersected by the contour (50D') of the layer (n3) are irradiated only in the interior region forming the component (3), and/or

wherein the start of the irradiation begins with a reduced energy input in the region of the irradiation fields that are intersected by a contour (50B') of a layer (n1) projected onto the layer (n3), in particular in the direction of the layer, wherein this layer (n1) has been irradiated in the casing region (41) up to the contour (50B'), and/or wherein the irradiation fields, which are intersected by a contour (54B', 54C') projected onto the layer (n3), in particular in the direction of the layer, are irradiated as a whole with the reduced energy input or as a whole with the energy input of the core region (39).

5. A manufacturing device (1) for the additive manufacturing of a three-dimensional component (3) from a powder (5), comprising

a manufacturing space (9) providing a work surface (27) and comprising a platform region (17A),
a construction cylinder (21), which has a carrier (19) that can be moved in height, on which the three-dimensional component (3) is to be produced in layers on a surface of a construction platform (17),
a sliding device having a coater (23) for generating powder layers with the powder (5) in the platform region (17A),
an irradiation system (15) for generating a beam for irradiating the powder layers in the platform region (17A) for the layer-by-layer production of the three-dimensional component (3) and
a control unit (31) which, based on irradiation data of an irradiation plan of the three-dimensional component (3), controls the manufacturing of the three-dimensional component (3) in accordance with a method according to any one of claims 1 to 4, wherein in particular the irradiation data define regions (k1, k2, h1, h2) of the powder layers to be irradiated, the regions (k1, k2, h1, h2) to be irradiated comprise a casing region (41) and a core region (39), and a density of irradiated powder layers is lower in the casing region (41) than in the core region (39).

**Revendications**

1. Procédé de fabrication additive d'une pièce tridimensionnelle (3) à partir d'une poudre (5) comprenant les étapes suivantes :
Subdivision d'un modèle de structure en couches de la pièce (3) à fabriquer en une zone centrale (39) et une zone de revêtement (41) adjacente à la zone centrale (39), la zone de revêtement (41) formant au moins une section de la surface de la pièce tridimensionnelle (3), et Exécution d'un processus d'irradiation à base de couches basée sur le modèle de structure de couches, dans lequel une densité de couches pulvérulentes irradiées dans la zone de revêtement (41) est inférieure à celle dans la zone centrale (39) adjacente dans la direction du plan de couche, la densité étant déterminée par le nombre de couches pulvérulentes irradiées dans la direction de la normale des couches pulvérulentes par unité de longueur, la pièce (3) présentant une structure en surplomb (47) et est fabriquée par fusion laser sélective sur une plateforme de construction (17), comprenant les étapes supplémentaires suivantes :

Fourniture d'un plan d'irradiation basé sur un modèle de structure en couches de la pièce tridimensionnelle (3), le modèle de structure en couches comprenant une séquence de couches (nk, n1,...n9), dont chacune est associée à un contour (50A, 50B, 50C, 50D) spécifique à une couche de la pièce (3), la séquence comprenant un premier sous-groupe de couches (n1, n3, n5) et un second sous-groupe de couches (n2_s, n4_s, n6_s) qui sont imbriquées les unes dans les autres, et une irradiation de la poudre (5) jusqu'au contour (50A, 50B, 50D) étant prévue dans le premier sous-groupe de couches (n1, n3, n5) dans la zone de la structure en surplomb (47), une irradiation de la poudre (5) étant prévue uniquement jusqu'à une distance (a2, a4, a6) du contour (50C) dans le second sous-groupe de couches dans la zone de la structure en surplomb, et

Application séquentielle de couches pulvérulentes sur la plateforme de construction (17) et irradiation des couches pulvérulentes avec des paramètres d'irradiation du faisceau laser conformes au plan d'irradiation.

2. Procédé selon la revendication 1, dans lequel, pour l'application des couches pulvérulentes, la poudre (5) est appliquée avec un applicateur (23) à partir d'une zone de réserve (25A) dans une direction d'application, et la structure en surplomb est alignée à l'opposé de la direction d'application de sorte que le contour d'au moins une couche à irradier subséquente dans la zone de la structure en surplomb (47) dépasse plus près de la zone de réserve (25A) que le contour d'une couche pulvérulente précédemment irradiée, et/ou

les paramètres d'irradiation du faisceau laser étant réglés en fonction de l'interaction souhaitée du faisceau laser avec la poudre (5) dans une zone centrale de la pièce (3).

3. Procédé selon la revendication 1 ou 2, dans lequel, dans le modèle de structure de couches, une couche (n3) est subdivisée en champs d'irradiation (71k, 73k, 71r, 73r), notamment rectangulaires, et dans lequel, au cours du processus d'irradiation, dans les champs d'irradiation (71r, 73r) de la zone de revêtement (41), notamment dans la zone de la couche (n3) proche du contour, est réalisé un apport d'énergie réduit par rapport à l'apport d'énergie dans la zone centrale (39), notamment dans les champs d'irradiation (71k, 73k) éloignés du contour.

4. Procédé selon la revendication 3, dans lequel les champs d'irradiation (73r) d'une couche (n3) qui sont coupés par le contour (50D') de la couche (n3) ne sont irradiés que dans la région intérieure formant la pièce (3), et/ou

dans lequel le début de l'irradiation commence par un apport d'énergie réduit dans la zone de ces champs d'irradiation qui sont coupés par un contour (50B') d'une couche (n1) projeté sur la couche (n3), notamment dans la direction de la couche, cette couche (n1) ayant été irradiée jusqu'au contour (50B') dans la zone de revêtement (41), et/ou

les champs d'irradiation, qui sont coupés par un contour (54B', 54C') projeté sur la couche (n3), notamment dans la direction de la couche, étant irradiés dans leur ensemble avec l'apport d'énergie réduit ou dans leur ensemble avec l'apport d'énergie de la zone centrale (39).

5. Dispositif de fabrication (1) pour la fabrication additive d'une pièce tridimensionnelle (3) à partir d'une poudre (5) avec

un espace de fabrication (9) fournissant un plan de travail (27) et comprenant une zone de plateforme (17A), un cylindre de construction (21), qui présente un support (19) déplaçable en hauteur, sur lequel la pièce tridimensionnelle (3) doit être fabriquée par couches sur une surface d'une plateforme de construction (17), un dispositif coulissant avec un applicateur (23) pour produire des couches pulvérulentes avec la poudre (5) dans la zone de plateforme (17A),

un système d'irradiation (15) pour générer un faisceau pour irradier les couches pulvérulentes dans la zone de plateforme (17A) pour la fabrication par couches de la pièce tridimensionnelle (3), et

une unité de commande (31) qui, sur la base des données d'irradiation d'un plan d'irradiation de la pièce tridimensionnelle (3), commande la fabrication de la pièce tridimensionnelle (3) selon un procédé selon l'une quelconque des revendications 1 à 4, dans lequel notamment les données d'irradiation définissent les zones à irradier (k1, k2, h1, h2) des couches pulvérulentes, les zones à irradier (k1, k2, h1, h2) comprenant une zone de revêtement (41) et une zone centrale (39), et une densité de couches pulvérulentes irradiées dans la zone de revêtement (41) étant inférieure à celle dans la zone centrale (39).

# FIG 1

FIG 2

FIG 3

FIG 4A

FIG 4B

## FIG 5A

$n_9$

$39''$

$n_{8-s}$

a

$n_7$

$n_{6-s}$

$41''$

$n_5$

$n_{4-s}$

$n_3$

$47$

$n_{2-s}$

$n_1$

$n_k$

$n_k$

$n_k$

$n_k$

## FIG 5B

a6

$n_{6-s}$

d6

$n_5$

d5

a4

$n_{4-s}$

d4

50D

$n_3$

d3

a2

$n_{2-s}$

50C

d2

$n_1$

47

50B

d1

50A

$n_k$

$n_k$

FIG 6D

51B

h3  51A  K3

50D

49D

n3

d3

FIG 6C

a2

50C

d2

K2

49C

n2_s

FIG 6B

h1  K1

50B

49B

n1

FIG 6A

d1

50A

49A

nk

FIG 7

n(x+12)

n(x+8)

n(x+4)

n(x)

n_s

n_s

n_s

FIG 8

41'''

39'''

α

17

FIG 9

EP 3 710 182 B1

## FIG 10

## FIG 11

FIG 12

69

## FIG 13

## FIG 14

# FIG 15

# FIG 16

a)    b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2732890 A2
- EP 1720676 B1
- EP 3127635 A1
- EP 3053674 A1
- US 20160233060 A1
- DE 102015217469 A1
- EP 3199327 A1
- EP 3621758 A1
- DE 102011105045 B3

**In der Beschreibung aufgeführte Nicht-Patentliteratur**

- Additive Manufacturing of Al Alloys and Aluminium Matrix Composites (AMCs). Light Metal Alloys Applications. 11. Juni 2014
- **L. M. R. SEABRA.** Design Optimisation for Selective Laser Melting (SLM) and Experimental Testing of an Aircraft Component. *Thesis to obtain the Master of Science Degree in Aerospace Engineering, Tecnico Lisboa,* Mai 2015
- **FOSTER et al.** *Optical, layerwise monitoring of powder bed fusion,* 12. August 2015, 295-307